# EUROPEAN PATENT SPECIFICATION

(11) **EP 3 762 177 B1**
(45) Date of publication and mention of the grant of the patent: **20.11.2024**
(21) Application number: 19710376.5
(22) Date of filing: 07.03.2019
(51) Int. Cl.: B23K 37/04, B23K 37/02, B23Q 3/06, B23Q 3/08, B23Q 1/76, B23B 49/02, B25H 1/00

(54) **SMART CLAMPING MECHANISM AND CORRESPONDING CLAMPING METHOD**
INTELLIGENTER KLEMMMECHANISMUS UND ENTSPRECHENDES SPANNVERFAHREN
MÉCANISME DE SERRAGE INTELLIGENT ET MÉTHODE DE SERRAGE CORRESPONDANTE

(30) Priority: 08.03.2018 NL 2020554
(43) Date of publication of application: 13.01.2021
(73) Proprietor: Flanders Make vzw, 3920 Lommel (BE)
(72) Inventor: BEY-TEMSAMANI, Abdellatif, 3920 LOMMEL (BE); VAN DONINCK, Bart, 3920 LOMMEL (BE); JEURGEN, Niels, 3920 LOMMEL (BE); DEPRAETERE, Bruno, 3920 LOMMEL (BE)
(74) Representative: EP&C
(86) International application number: PCT/EP2019/055752
(87) International publication number: WO 2019/170825

(56) References cited:
- EP-A1- 3 369 525
- GB-A- 2 299 772
- JP-A- 2012 101 331
- US-A1- 2005 147 477
- US-A1- 2006 143 890
- US-A1- 2011 002 751
- US-A1- 2016 108 932

## Description

The present invention relates to the technical field of high-precision clamping, and more particular, to a clamping mechanism and to a method for locally clamping a workpiece during a process with a machine, see claims 1 and 13 respectively (see for example US 2006/143890 A).

The present invention relates to applications where a high-precision clamping system is needed to avoid/compensate for deformation of the workpiece due to its size/thickness and/or due to external applied forces. The description focusses primarily on applications in the technical field of machining of workpieces, in particular the clamping of large freeform workpieces during machining process. However, the clamping mechanism according to the invention can be applied in other technical fields as well, including metal sheets processing, forming and large parts handling.

During processes such as machining and forming, a process force is exerted by a tool on the workpiece, said tool e.g. being in direct contact with the workpiece, e.g. drilling tool or indirectly exerting said process force, e.g. by emitting a water jet or a magnetic field . Said process force can cause unwanted movements such as vibrations, bending and/or deflection of the workpiece, for example when the workpiece is relatively large and thin. Also gravity or external vibrations may cause such unwanted movements. Said movements causes inaccuracies and insufficient precision in the process, because the location of the workpiece on which the tool engages is adjusted by said movements, as well as poor quality of the machined parts and its edges. Similar issues occur in other processes where a workpiece needs to be engaged in a precise location, for example when providing an adhesive such as glue with high precision.

Conventionally the workpiece is clamped close to its periphery and it may be supported on a surface opposite of the surface which the tool engages. For example, if the workpiece is arranged horizontally, the tool may engage from above and the workpiece may be supported from below and/or clamped on the sides.

Similar issues may arise from vibrations and deflections of the tool relative to the workpiece.

In certain industries, such as the manufacture of aircrafts, the requirements of precision during such processes are high, while the workpieces may be relatively large plate-like workpieces, sometimes curved. As conventional methods result in inaccuracies due to bending at the location the tool engages, they do not suffice. Tailored support structures may be developed specifically fitted to the shape of the workpiece and the locations of the workpiece to be processed. However, this is an expensive and time consuming practice, especially when the number of like workpieces is too small to justify a mass-manufacturing process.

Therefore, a need exists for a mechanism for reducing the bending due to the process force, which can be applied to a variety of workpieces.

It is an object of the present invention to reduce at least one of the disadvantages mentioned above, or at least provide an alternative mechanism for clamping the workpiece during the process.

This object is achieved with a clamping mechanism for locally clamping a workpiece during a process with a machine as defined in claim 1.

Further embodiments of the clamping mechanism are defined in dependent claims 2 to 12.

The present invention relates to a clamping mechanism which is adapted to locally clamp a workpiece. As will be clear from the explanation below, the present invention is in particular advantageous for the processing of workpieces that are easily bended during the process due to a process force. For example, any workpiece that is large relative to its thickness may be easily bended. In this context, the thickness is seen in the direction of the process force. The workpiece may for example be a plate-like or sheet-like workpiece, which optionally has a curved surface.

The workpiece is clamped during a process wherein a tool exerts a process force on the workpiece. The process is performed with a machine, which comprises the tool. Examples of such a process include machining processes such as drilling, milling, water jet cutting, stamping, blanking, folding and punching, or processes such as forming, high-precision gluing, and some handling processes. In some processes, the tool may also rotate around its longitudinal centre axis. The process may be performed by any kind of suitable machine, such as an NC- or CNC-machine, a multi-axis robot or a mobile robot. The process may be performed with an automated machine, e.g. configured to automatically arrange the tool in a machining position relative to the workpiece. Alternatively, the process may be performed with a handheld machine, e.g. requiring assistance of an operator.

During the process, the tool of the machine interacts with the workpiece and exerts the process force on the workpiece. It is noted that in the context of the present invention the terms as interacting and engaging may be used interchangeable, and are both to be understood as exerting a force on, which in some cases may be contactless, for example with magnetic or air pressure forces. In case of a process such as water jet cutting, the water jet itself may be considered to be the tool. At the beginning of the process, the tool interacts with a first surface of the workpiece. The process force generally has a component in a direction perpendicular to the first surface of the workpiece, and directed into a direction towards and/or away from the workpiece, which usually corresponds with a direction in which the workpiece extends from the first surface to a second surface located opposite of the first surface. In the context of the present invention, in the case a surface in not flat, a direction perpendicular to that surface is to be understood as parallel to the direction of what is generally in geometry referred to as the normal, i.e. the normal to a surface at a certain point is a vector that is perpendicular to the tangent plane to that surface at point. Without the clamping mechanism according to the invention, the process force causes the workpiece to bend and/or vibrate. Also gravity and external vibrations may cause the workpiece to bend and/or vibrate.

For example, when the workpiece is arranged horizontally, i.e. when the first surface is arranged in or parallel to the horizontal plane, and the tool engages from above, the first surface is the upper surface of the workpiece and the second surface is the bottom surface. The process force then has at least a component directed vertically, e.g. downwards. In a process such as drilling said component is usually the only component or at least the main component of the process force. However, in a process such as milling, the process force may also comprise a component in a direction perpendicular to said previously mentioned component.

The clamping mechanism according to the invention comprises a machine interface, which can connect the clamping mechanism to the machine for the process, e.g. by connecting the clamping mechanism to the tool or to a tool holder for holding the tool. The tool holder may for example be a spindle. The clamping mechanism can thus be attached to the part of the machine that is moveable during the process. As such, the clamping mechanism, or at least the machine interface of the clamping mechanism, is moveable together with the tool during the process. This ensures that the clamping mechanism is arranged close to the location of the working piece where the tool exerts the process force during the process, and thus the location that is most prone to bending due to the process force.

The clamping mechanism according to the invention further comprises one or more clamps. The one or more clamps are adapted to interact with the first surface of the workpiece. Since the clamping mechanism is moveable together with the tool, the one or more clamps interact with or engage the first surface of the workpiece in the vicinity of the location where tool exerts the process force on the workpiece. In other words, the one or more clamps exert a force on the workpiece close to the location where the workpiece is subjected to the process force. This allows to mitigate or at least reduce the effects that the process force has on the workpiece, such as bending and vibrations of the workpiece. The accuracy of the process is thereby increased.

Since the clamping mechanism is connected to the tool and moves together with the tool, it is ensured that the one or more clamps are close to the location where the process force is exerted. This is especially advantageous when the workpiece is not completely supported at a surface opposite of the first surface, which would e.g. be the case when the workpiece is a plate arranged on a table, but when the workpiece is supported by one or more distinct supports. In such case locations of the workpiece that are not directly supported by said distinct supports are more sensitive for vibrations and bending, which is mitigated by the local clamping mechanism according to the invention. For example, in the vicinity of the tool could, depending on the application and the size of the tool, be defined as within 30 cm, more preferably within 20 cm, more preferably within 10 cm, more preferably within 5 cm, more preferably within 3 cm.

According to the present invention, said one or more clamps are adapted to, when interacting with the first surface, exert a clamping force on the workpiece to attract the workpiece to the clamping mechanism. The clamping force is arranged to attract the workpiece to the clamping mechanism, in particular to the one or more clamps. The clamping force prevents, or at least reduces or limits, movement of the workpiece relative to the one or more clamps, preferably in at least two mutually opposite senses in a direction. In the context of this invention, a force is to be understood as comprising a magnitude, a direction and a sense. For example, the direction may be vertical and the sense can then be either upwards or downwards. When forces or movement are described as having an opposite direction or being directed opposite, it is to be understood that they have they have the same direction but opposite sense. When a direction of a movement or a force is described as being towards or away from something, it is to be understood that this includes the sense.

For example, the clamping force prevents movement of the workpiece relative to the one or more clamps in both senses in a direction substantially perpendicular to the first surface of the workpiece, wherein the direction is parallel to the process force exerted by the tool during the process. For example, in a drilling process on a horizontal, flat plate, the process force is directed vertically downwards. The clamping force is then arranged to at least reduce the movement of the workpiece relative to the one or more clamps. It is noted that in the context of the present invention the terms as interacting and engaging may be used interchangeable, and are both to be understood as exerting a force on, which in some cases may be contactless, for example with magnetic or air pressure forces

Thus, the clamping mechanism in this embodiment provides in a clamping force exerted in the vicinity of the location where the process force is exerted. The movement of the workpiece, including vibrations, is reduced or at least more predictable. Therefore, the precision of the process is increased.

The clamping mechanism locally clamps the workpiece. In this context, locally means in the vicinity of the tool or where the tool exerts the process force on the workpiece, which is achieved by the clamping mechanism moving together with the tool. The clamps are in the vicinity of the tool regardless of what part of the workpiece the tool is processing. In order to maintain the clamping force during the process, the clamping force is preferably larger than the process force.

For example, the process force may be in the order of 100N. The one or more clamps can then be designed to provide a clamping force of approximately 200N. Such forces can for example be representative for the drilling or milling of composite plates. However, the clamps can be designed to provide any required clamping force depending on the process.

In an embodiment the one or more clamps are adapted to, when interacting with the first surface, at least partially reduce vibrations of the workpiece by suppressing movement of the workpiece. It is noted that this can be achieved if the one or more clamps exerting a clamping force to attract the workpiece as described above, but this can also be achieved by clamps that do not exert a clamping force to attract the workpiece. For example, the clamps can be brought into contact with the workpiece, thereby suppressing movement of the workpiece in the direction towards the clamp. Higher accuracy of the process can be achieved because of the reduced vibrations. In further embodiments as explained in more detail further below, an actuator can be provided to provide an actuator force. By arranging the actuator to provide the actuator force at the right moments and/or in the right magnitude, the movement of the workpiece can be suppressed even more, resulting in smaller vibrations.

In an embodiment, the locations of the one or more clamps relative to the machine interface is fixed, e.g. by a rigid connection between the one or more clamps and the machine interface, e.g. by one or more bars. Once the clamps are interacting with the workpiece, the distance between the location of the workpiece where the one or more clamps interact and the tool is fixed. This at least reduces vibrations at least at said location of the workpiece relative to the tool. This is in particular advantageous in processes where the tool does not move closer to or deeper in the workpiece during the workpiece, e.g. during waterjet-cutting where the tool is at a fixed distance to the workpiece during the process, or milling.

According to the present invention, the one or more clamps are adapted to be moveable relative to the machine interface by using an actuator, for example during the process. For example, a guide may be provided to allow such movement. In addition, one or more of a damper or spring can be provided to control said movement, which will each be explained in more detail further below. By allowing such movement, the position of the workpiece relative to the tool can be controlled via the clamps. Vibrations and bending of the workpiece is reduced.

The clamping mechanism further comprises an actuator adapted to move the one or more clamps relative to the machine interface, wherein the actuator is adapted to provide an actuator force which is exerted on the workpiece via the one or more clamps. The actuator force can be arranged to at least partially counteract the process force and/or at least partially reduce vibrations of the workpiece.

The actuator may for example be an electromotor, an electromagnetic motor or actuator, a pneumatic actuator or a hydraulic actuator. The actuator is adapted to move the one or more clamps relative to the machine interface. In general, said movement is parallel to the clamping force when the clamps are adapted to provide said clamping force, being towards or away from the workpiece. Since the clamping mechanism is connected to the machine by the machine interface, the actuator can also move the one or more clamps relative to the machine, and as such relative to the tool. The actuator is arranged to provide an actuator force to accomplish said movement. When the clamps are interacting with the workpiece, the workpiece can be pulled towards the machine interface by moving the one or more clamps in the direction towards the machine interface. Similarly, the workpiece can be pushed away from the machine interface by moving the one or more clamps away from the machine interface. It is further noted that when during the process the tool interacts with the workpiece, the process force may prevent the clamps, also interacting with the workpiece, to actually move relative to the machine interface, e.g. because the process force exerted on the workpiece in an opposite direction which is larger than the actuator force. In that situation, the actuator force will still be exerted to the workpiece by subjecting the one or more clamps to a force in a direction towards or away from the machine interface.

The actuator force can be arranged to at least partially counteract the process force. The actuator force opposes the process force and at least partially compensates the process force. The resulting force, i.e. the sum of the process force and the actuator force, to which the workpiece is subjected, is smaller than the process force itself. The bending of the workpiece is reduced, and the precision and accuracy of the process improved.

The actuator force can be arranged to at least partially reduce vibrations of the workpiece. The actuator force is arranged to move the one or more clamps relative to the machine interface to oppose at least part of the movement of the workpiece that constitute the vibrations, e.g. by moving in the opposite direction at a similar pace, e.g. the movements being at the same frequency or frequency range but in opposite phase or magnitude. The resulting movement of the workpiece is smaller than the original movement that would occur without the clamping mechanism. The vibrations of the workpiece are reduced, and the precision and accuracy of the process is improved. Optionally, e.g. when the one or more clamps do not exert a clamping force attracting the workpiece, only movements of the workpiece in one sense, e.g. towards the clamps, are opposed.

For example, the actuator force that the actuator can provide can be chosen in the same order of magnitude as the process force. For example, when the process force is approximately 100N, the actuator force provided by the actuator may also be approximately 100N. Furthermore, the clamping force provided by the one or more clamps may be approximately 200N.

In an embodiment, the actuator force is optionally arranged to at least partially counteract a component of the process force which is in a direction substantially perpendicular to the first surface of the workpiece where the tool interacts with the first surface and/or the actuator force is arranged to at least partially counteract a component of the movement of the workpiece which is in a direction substantially perpendicular to the first surface of the workpiece where the tool interacts with the first surface. In case of a non-flat surface, perpendicular is to be understood as parallel with the normal in the point of the first surface where the tool interacts with the first surface. Since in general said component directed perpendicular to the first surface causes most of the bending, it is effective to at least partially counteract this component.

For example, if the process is a drilling process on a horizontal workpiece which is engaged from above, the process force is vertically and directed downwards. The actuator force can then be arranged to be vertically as well, but directed upwards. For example, in a milling process on a horizontal workpiece which is engaged from above, the process force may have a horizontal component and a vertical component, the horizontal component being generally considerably larger than the vertical component. In this embodiment, the actuator force can be arranged to at least partially counteract the smaller vertical component, since it is said vertical component of the process force which most contributes to the bending of the workpiece. The actuator force can then for example be directed vertically.

According to the present invention, the clamping mechanism further comprises a control unit which comprises a processing unit for determining a desired actuator force and/or a desired actuator displacement, and an output terminal connected to the actuator for controlling the actuator during the process based on the determined desired actuator force and/or displacement.

The control unit is configured to control the actuator force to which the workpiece is subjected via the one or more clamps during the process by controlling the actuator, and as such preferably the counteracting of the process force and/or the suppressing of the movement of the workpiece. In the present embodiment, the processing unit of the control unit determines the desired actuator force or displacement. The actuator displacement is the movement of the actuator. Based on said desired actuator force or displacement the actual actuator force of the actuator is controlled, via the output terminal of the control unit. The control unit of the clamping mechanism can be incorporated or integrated with a control unit of the process, or can be a separate unit working independently of the control unit of the process. In case a desired actuator displacement is determined, it is possible that the desired actuator force is determined by an internal control unit of the actuator, based on said desired actuator displacement which functions as an input for the actuator.

Further according to the present invention, the control unit of the clamping mechanism comprises an input terminal for receiving process information. Further according to the present invention, input terminal is connected to the actuator, and/or a sensor. The control unit can further be connected to a control unit of the process which provides said process information, and/or an operator input module, e.g. a computer, for receiving input that can be provided by an operator.

And further according to the present invention, the processing unit of the control unit is configured to estimate the feed rate of the tool of the process and/or movement of the workpiece based on said process information. Herein the feed rate is to be understood as the motion of the tool, in particular in a direction perpendicular to the first surface of the workpiece. The terms feed rate, motion of the tool and tool motion are used interchangeably. The processing unit is, further according to the present invention, configured to determine the desired actuator force and/or displacement based on said estimated real-time process force and/or feed rate and/or movement of the workpiece. The control unit is configured to control the actuator force via the output terminal based on said determined desired actuator force and/or displacement. Thus, in this embodiment the control unit compensates the real-time process force and/or real-time movement of the workpiece. As such, the bending and/or vibrations can be compensated even more, regardless of the actual process force. The clamping mechanism can be used for a variety of processes and the actuator force and as such the counteracting of the process force and/or movement of the workpiece is adapted on the actual situation. The clamping mechanism can further automatically adjust to various tool depths, workpiece shapes or thickness, feed rates, etc.

For example, the one or more clamps can be moved substantially at the feed rate relative to the machine interface in a direction opposite of the movement of the tool at the same feed rate. These movements substantially compensate each other, resulting in the one or more clamps to remain in substantially the same position relative to the fixed world. The workpiece, or at least the location of the workpiece where a clamp is engaging, then also remains in substantially the same position and hence does not bend, or at least bends less.

For example, the one or more clamps can be moved substantially at the frequency relative to the machine interface in a direction opposite of the movement of the workpiece at the same frequency. These movements substantially compensate each other, resulting in the one or more clamps to remain in substantially the same position relative to the fixed world. The workpiece, or at least the location of the workpiece where a clamp is engaging, then also remains in substantially the same position and hence does not vibrate, or at least vibrates less.

Optionally, the control unit is adapted to communicate with the control unit of the process, and to receive an input parameter or a control parameter such as the feed rate or input force, based on which the process force and/or feed rate can be estimated.

Optionally, the control unit is adapted to estimate the process force and/or feed rate and/or movement of the workpiece without communicating with the control unit of the process. The process information is determined independently of the process or control unit of the process. The clamping mechanism is arranged to determine the process information. The clamping mechanism does not need any interaction with the process to function, which makes it very flexible, being suitable for and easily applicable with a wide variety of processes.

For example, the feed rate of the tool can be measured at the beginning of the process, e.g. by first engaging the workpiece with the one or more clamps, and then measuring the speed at which the machine interface, moving together with the tool, approaches the workpiece. For this, the clamping mechanism may comprise for example one or more sensors or accelerometers, measuring e.g. one or more of position, speed, acceleration, pressure, compression or force. It is also possible to obtain this information from the actuator itself; for example, if the actuator is a linear electromotor, the displacement thereof can be monitored, and this information can be used to determine the feed rate of the tool. Possibly, it is assumed that the feed rate of the process is kept constant during the process.

Optionally, the movement of the workpiece is determined by taking into account the process force and/or feed rate, as well as optionally characteristics of the workpiece such as the material and thickness, and/or the arrangement of the workpiece and how it is supported.

Optionally, the movement of the workpiece is determined by determining the force to which the actuator is subjected. For example, when the workpiece is moving this will cause the one or more clamps to move relative to the machine interface, which is detected by the actuator. The actuator force can be arranged to oppose this motion.

Optionally, the movement of the workpiece is determined using one or more sensors or accelerometers measuring e.g. one or more of position, speed, accelerations or compression of the workpiece or pressure or force exerted on the workpiece,

In an embodiment wherein the clamping mechanism comprises the control unit, the clamping mechanism further comprises a communication terminal for receiving information relating to at least a second process, wherein the control unit is preferably configured to control the actuator force via the output terminal based on said information related to at least the second process. Optionally, the control unit is also configured to transmit data via the communication terminal or a second communication terminal.

The information relating to the second process can e.g. be received from a control unit simultaneously performing the second process on the same workpiece, e.g. the control unit of a second clamping mechanism. Influences of the second process on the workpiece can then be taken into account, e.g. forces exerted on the workpiece during the second process, and/or it can be ensured that both processes do not hinder each other.

Alternatively or in addition, the information relating to the second process can e.g. be received from a historical database or memory comprising information relating to a second process performed earlier on the same or a similar workpiece, the information optionally including information from control measurements done on said similar workpiece after the process has been finished. This allows to take into account information obtained from earlier processes, and improve the current process by reducing inaccuracies in comparison to earlier processes. For example, a trial run can be performed on a similar workpiece, wherein results may be used for calibration of the clamping mechanism. In an embodiment the second process had been performed earlier using the same clamping mechanism, and preferably also using the same machine and tool. In an embodiment the historical database may be comprised by the clamping mechanism. The above embodiments allow to make to control more robust.

An example of the above embodiments can be described as the clamping mechanism comprising a historical database or memory comprising information relating to a second process similar or identical to the process to be performed, said second process being performed earlier on the same or a similar workpiece, preferably using the same clamping mechanism, and preferably also using the same machine and tool, wherein the control unit is configured to take into account said information during the process to be performed.

In an embodiment wherein the clamping mechanism comprises the actuator, the actuator force is arranged during the process to change magnitude and/or sense of the direction and/or the direction to at least partially counteract vibrations of the workpiece and/or the tool. Said vibrations can for example be caused by the process force, e.g. during processes such as milling. Vibrations can also occur when tool leaves the workpiece at a second surface opposite of the first surface, e.g. during drilling when the hole is fully drilled, or when the tool disengages the workpiece. In some high-precision processes, even vibrations from the fixed world can be problematic, e.g. caused by wind or passing traffic.

To at least partially counteract the vibrations, the actuator force can be arranged to change the sense of its direction, preferably at substantially the same frequency range as the vibrations. As such, any movement of the workpiece in a movement direction caused by the vibration is at least partially counteracted by a force or movement of the actuator in the same direction but at least partially opposite sense of the movement direction.

In an embodiment, the clamping mechanism further comprises a damper between the one or more clamps and the machine interface. The damper can for example by a pneumatic or a hydraulic damper. The damper dampens high frequency vibrations of the one or more clamps relative to the machine interface, which is in particular advantageous when the process is a machining process such as milling. The damper is used in combination with the actuator. The mechanism in that embodiment is a passive system. In such a passive system the damper allows the movement of the machine interface relative to the one or more clamps while said clamps interact with the workpiece and optionally exert the clamping force on the workpiece. Since said relative movement is allowed, the movement of the one or more clamps, and as such the workpiece, is reduced when the tool moves relative to the workpiece. The workpiece is subjected to less vibrations and the precision of the process increases.

In an embodiment, the clamping mechanism further comprises at least one spring between the one or more clamps and the machine interface. The spring is arranged such that is exerts a spring force on the one or more clamps in the direction towards the machine interface, at least when the distance between the one or more clamps and the machine interface exceeds a predetermined threshold. The spring force is exerted by the one or more clamps on the workpiece, and has a similar effect as the actuator force. The spring force is generally directed perpendicular to the first surface of the workpiece, either away or towards the workpiece, based on the deformation of the spring. The spring force can partially counteract the process force. Furthermore, in the situations that the workpiece is arranged horizontally and the tool and clamping mechanism engage the workpiece from above, the spring counteracts the gravity force due to the weight of components of the clamping mechanism, such as the one or more clamps. Said gravity force will be exerted on the workpiece, in the same direction and sense as the process force and thus not opposing said process force. This would cause bending of the workpiece. That effect is thus at least reduced by the spring.

In an embodiment, the clamping mechanism comprises at least one hinge for allowing at least one of the one or more clamps to pivot about the hinge relative to the machine interface. The hinge allows to engage a curved or inclined surface with the respective clamp. As such, the one or more clamps can interact, e.g. the clamping force can be exerted, on the curved or inclined surface.

In an embodiment, the machine interface comprises mechanical connection means adapted to attach the clamping mechanism in a releasable manner to the machine for the process, e.g. to the tool or tool holder. Thus, the clamping mechanism can easily be attached to or detached from the machine. Preferably, the mechanical connection means can be adapted in size. For example, if the clamping mechanism is adapted to be attached to a cylindrical spindle, the mechanical connection means may comprise a circular attachment mechanism for clamping around the cylindrical spindle. The diameter of said circular attachment mechanism can then be adaptable, such that the clamping mechanism can be attached to spindles of different sizes, either on the same machine or on different machines. The clamping mechanism in this embodiment thus is an add-on tool which can be added to an existing machine, making it very flexible in use and suited for many applications.

Alternatively or in addition to the mechanical connection means being adaptable in size, they may also be interchangeable. That is, the clamping mechanism may be a modular system such that multiple, different mechanical connection means can each be attached to any clamping mechanism. As such, the range of processes for which the clamping mechanism can be applied is even wider.

In an embodiment, the clamping mechanism may be a modular system, wherein, depending on the embodiment, the machine interface or mechanical connection means thereof is easily replaceable, and/or wherein the each of the clamps are easily replaceable, and/or wherein the clamps together are easily replaceable, e.g. by another number and/or type of clamps, and/or wherein the actuator is easily replaceable and/or can be disposed of, and/or wherein the damper is easily replaceable and/or can be disposed of, and/or wherein the spring is easily replaceable and/or can be disposed of.

In an embodiment, at least one of the one or more clamps is adapted to be mechanically connected to the workpiece in a releasable manner, e.g. with a suction cup. The suction cup generally creates a partial vacuum between a suction cup material, e.g. an elastic, flexible material, and the workpiece, when the suction cup is pressed against the workpiece. At least a part of the air that was present in the space between the suction cup material and the workpiece is removed from said space, thereby leaving the partial vacuum afterwards. Once the partial vacuum is created between one or more suction cups and the workpiece, the workpiece is attached to the clamps and thus the clamping mechanism, and the clamping force is created. When the clamps are subjected to a force, e.g. by the actuator, said force is passed on to the workpiece via the suction cups. Optionally, the suction cups can be adapted to the environment of the process. For example, the suction cups can be resistant against removed particles of the workpiece, cooling liquids, water, heat and/or specific chemical environments. Furthermore, the size of the suction cups may be chosen in function of the required clamping force as provided by the suction force of the partial vacuum. Also the number of suction cups may be chosen in function of the required clamping force.

To provide the partial vacuum between the suction cup and the workpiece, a vacuum pump or vacuum generator can be provided which is connected to the suction cups for removing at least a part of the air present between the suction cup material and the workpiece. The clamping force can be increased by removing more air. In an embodiment, it is possible to control the clamping force by controlling the vacuum pump, in particular by controlling the remaining pressure in the partial vacuum or by controlling the amount of air to be removed. In an embodiment the vacuum pump or vacuum generator can be arranged such that liquid, e.g. water of cooling liquid, can be removed, e.g. the vacuum generator may be without seals. In addition a vacuum filter may be provided before the vacuum generator or vacuum pump e.g. for filtering out particles such as dust and chips removed from the workpiece by the process. Said particles and liquid could be sucked up when removing the air between the suction cup and the workpiece.

In an embodiment, at least one of the one or more clamps is adapted to create a magnetic field for exerting a magnetic clamping force on a ferromagnetic workpiece. Said clamp may for example be a permanent magnet, or may comprise an electromagnetic component such as a coil for creating the magnetic field. In case the workpiece is ferromagnetic, it will be attracted to said clamp by the magnetic field. As such, a magnetic clamping force is created.

In an embodiment, the one or more clamps are arranged to provide a clamping force in a first direction to attract the workpiece to the clamping mechanism and/or suppress movement of the workpiece is said first direction, while allowing movement of the clamp relative to the workpiece is a second direction, for example substantially perpendicular to the first direction. This makes the clamping mechanism suitable for processes wherein the clamp, e.g. by following the tool, moves relative to the workpiece in said second direction, for example milling. For example, the first direction is substantially perpendicular to the first surface of the workpiece on the location where the tool interacts with the first surface and the second direction is substantially parallel to the first surface of the workpiece on said location.

In a first example of such clamps, at least one of the one or more clamps comprises a Bernoulli gripper. The Bernoulli gripper applies the Bernoulli airflow principle to subject to workpiece to the clamping force. A high velocity airstream with low static pressure is applied to create a pressure below the atmospheric pressure, which creates the clamping force. The Bernoulli gripper has the advantage that it allows movement of the clamp relative to workpiece while maintaining the clamping force. This makes the Bernoulli gripper suitable for processes such as milling.

Optionally, pads can be provided on the Bernoulli gripper. These pads may be made from a resilient or elastic material such as rubber or polymer, e.g. polytetrafluorethylene (PTFE), also known under the trademark Teflon. The pads may be in contact with the workpiece during the clamping during the process, and are adapted to enable smooth sliding over the workpiece while avoiding damaging the workpiece, e.g. through scratching. It also possible to provide bearings, e.g. ball bearings, to allow movement of the clamps relative to the workpiece.

In a second example of clamps that are arranged to provide a clamping force in a first direction to attract the workpiece to the clamping mechanism, while allowing movement of the clamp relative to the workpiece is a second direction, at least one of the one or more clamps is adapted create a magnetic field for exerting a magnetic clamping force on a ferromagnetic workpiece. Said clamp may for example be a permanent magnet, or may comprise an electromagnetic component such as a coil for creating the magnetic field. Also in this embodiment pads or bearings, e.g. ball bearings or air bearings, can be provided as the contact surface between the workpiece and the clamp to allow movement of the clamps relative to the workpiece.

In an embodiment wherein the one or more clamps are arranged to provide a clamping force in a first direction to attract the workpiece to the clamping mechanism, while allowing movement of the clamp relative to the workpiece is a second direction, the one or more clamps are adapted to be moveable relative to the machine interface in the first direction. The clamping mechanism may further be adapted to allow movement of the one or more clamps relative to the machine interface in the first direction below a predetermined frequency while suppressing movement of the one or more clamps relative to the machine interface in the first direction above said predetermined frequency. Thereby, also movement of the workpiece in the first direction above said predetermined frequency can be suppressed. This embodiment allows for example a method wherein firstly the clamps interact with the first surface, either by direct contact or by exerting a force. Thereafter the tool can be brought into position, e.g. by cutting partly into the workpiece, i.e. moving into the first direction. During this movement the clamps may remain on the same position relative to the workpiece, because this movement is below the predetermined frequency and the machine interface, together with the tool, is moving relative to the clamps. However, if during the process, e.g. while moving in the second direction, the workpiece starts vibrating above the predetermined frequency, the clamping mechanism suppresses movement of the clamp relative to the machine interface and thus the tool. So, vibration of the of the workpiece relative to the tool is suppressed. An additional advantage is that during movement in the second direction, changes in thickness of the workpiece and/or direction of the first surface of the workpiece, may also cause movement below the predetermined frequency. The clamps can thus move relative to the machine interface and the tool such that they remain at the same position relative to the first surface, e.g. engaging the first surface.

To achieve the suppressing of movement above said predetermined frequency, the clamping mechanism may comprise the actuator as explained herein. Optionally the predetermined frequency may be given as an input to the control unit, e.g. by an operator or an algorithm. Alternatively or in addition, the clamping mechanism may comprise one or more springs and/or dampeners arranged to suppress said movement above the predetermined frequency. Said springs and dampers can be designed and/or selected such that they allow for movement below the predetermined frequency but suppress movement above it..

In an embodiment, a bending measurement sensor is provided. The bending measurement sensor is adapted to measure the bending of the workpiece during the process and is adapted to communicate with the control unit of the clamping mechanism. As such, a feedback loop is created which allows the control unit to control the actuator force with actuator based on the actual bending. The bending can thus be decreased even further and precision can be increased. It is noted that this embodiment can be used in combination with the control unit estimating the real-time process force, or without. Furthermore, the measurement provided by the bending measurement sensor can also be used for estimating said real-time process force.

The bending measurement sensor can for example include a laser sensor or a camera which is arranged at the side of the second surface the workpiece. For example, when the workpiece is arranged horizontally, the laser sensor or camera may be arranged under the workpiece, e.g. at the side of the workpiece such that the laser beam is directed approximately parallel of the workpiece before the process, or it may be arranged exactly under the location of the workpiece that is to be processed such that the laser beam is directed at said location and perpendicular to the workpiece.

In an embodiment, the bending measurement sensor is adapted to detect changes in the bending in at least the frequency range in which the workpiece vibrates during the process. The measurement can then be used by the control unit to control the actuator force such that the vibrations are even further reduced.

In an embodiment, a laser sensor or camera is provided for detecting when the tool is almost exiting the workpiece via the second surface. Said laser sensor or camera is provided on the other side of the workpiece than the clamping mechanism, i.e. at the side of the second surface of the workpiece. Often when the tool exits the workpiece, vibrations occur in the workpiece due to the changes in force to which the workpiece is subjected. In this embodiment, the clamping mechanism can be adapted to better compensate said vibrations.

In an embodiment the clamping mechanism comprises a memory or historical database for storing data of the operation of the clamping mechanism during previous processes, e.g. from measurements with sensors or applied actuator forces, wherein optionally one or more of said previous processes was performed on the same workpiece and/or one or more of said previous processes was similar or identical to the process to be performed on the workpiece.

In an embodiment the clamping mechanism comprises a connection module for being connected with an external server and/or with other clamping mechanisms and/or different machines or devices. As such, the clamping mechanism can be incorporated in industry 4.0 and/or Internet of Things (IoT) applications.

In an embodiment the clamping mechanism is controlled by an artificial intelligence algorithm (Al-algorithm). Said Al-algorithm could for example run on the control unit of the clamping mechanism, or the server that the clamping mechanism is connected to. The Al-algorithm takes into account the operation during previous processes from the concerning clamping mechanism and/or from other clamping mechanisms, in order to improve the operation of the concerning clamping mechanism and reduce the bending of the workpiece.

Applications of the above embodiments include for example recognizing when a workpiece is similar to a workpiece in a previous process, e.g. in a second process on the same workpiece or when multiple similar workpieces need to be processed in the same way. The thickness of the workpiece as determined in the previous process can then be used to anticipate when the tool will reach the second surface of the workpiece, and the clamping mechanism can be arranged to better compensate the vibrations that occur when the tool exits the workpiece at said second surface.

Another application is recognizing the type of material of the workpiece and possibly the thickness, e.g. by comparing measurements to a database. The clamping mechanism can then be controlled in a manner most suitable for the specific situation, e.g. based on material and/or thickness of the workpiece.

Another application is drilling a series of holes on the same or a similar workpiece, wherein when drilling the second and later holes, information obtained relating to drilling of earlier holes is used to improve performance, e.g. by helping to estimate desired actuator force or displacement, and/or reusing determined parameters such as material of the workpiece and thickness of the workpiece.

Other applications are when multiple processes need to performed on a single large workpiece, wherein cooperation and data-sharing between the multiple processes and their clamping systems can be beneficial.

In an embodiment, the machine interface of the clamping mechanism may be adapted to connect the clamping mechanism to a handheld machine, e.g. a powertool, a drilling machine or a grinding disc. The one or more clamps may further be adapted to clamp the handheld machine to the workpiece, wherein optionally the first surface of the workpiece extends in a non-horizontal plane, e.g. in a substantially vertical plane.

In this embodiment, the clamping mechanism arranges the handheld machine to the workpiece. This makes it easier for the operator, since part of the weight may be carried by the workpiece and/or it is easier to arrange the tool on the right position relative to the workpiece.

In a further embodiment, the workpiece may be rigid element, such as a wall, which remains stable during the process. The clamping mechanism may then be adapted to reduce vibration of the handheld machine relative to the workpiece.

The invention further relates to a method for locally clamping a workpiece with a clamping mechanism during a process with a machine as defined in claim 13.

Further embodiments are defined in the dependent claims 14-15.

The method according to the invention can be applied to and performed with the clamping mechanism according to the invention; however, the method according to the invention is not limited thereto. Nevertheless, components and definitions will have the same meaning with respect to the method according to the invention as they do with respect to the clamping mechanism according to the invention, unless specifically stated otherwise. Furthermore, features described with respect to the clamping mechanism according to the invention can be added to the clamping mechanism used in the method according to the invention, as can the associated uses and effects be added to the method itself.

The method according to the invention entails the local clamping of a workpiece with a clamping mechanism during a process. A tool of the process interacts with a first surface of the workpiece, in particular at the beginning of the process, and during the process the tool exerts a process force on the workpiece. The clamping mechanism is moveable together with the tool and comprises one or more clamps, e.g. because it is connected to the machine, e.g. to the tool or a tool holder such as a spindle.

The method according to the invention comprises a step of approaching the workpiece with the clamping mechanism. More precisely, the clamping mechanism approaches the workpiece at the location of the workpiece that is to be processed. That is, the location on which the tool of the process is arranged to interact with or engage the first surface of the workpiece. This is accomplished by following the movement of the tool towards said location, which is enabled by the clamping mechanism being moveable together with the tool. Preferably, the clamping mechanism does not need to be actively moved to accomplish this step; instead, the movement of the tool according to the process automatically and simultaneously carries the attached clamping mechanism to the desired location.

The method further comprises a step of interacting with the first surface of the workpiece with the one or more clamps. This may for example be accomplished by following the movement of the tool towards the first surface of the workpiece, or by an actuator which allows moving the one or more clamps relative to the tool.

The method further comprises a step of stop interacting the first surface of the workpiece with the one or more clamps. As such, the workpiece is released.

In the method according to the invention the one or more clamps exert a force on the workpiece close to the location where the workpiece is subjected to the process force. This allows to mitigate or at least reduce the effects that the process force has on the workpiece, such as bending and vibrations of the workpiece. The accuracy of the process is thereby increased.

In an embodiment the method further comprises a step of during the interacting with the first surface of the workpiece with the one or more clamps, exerting a clamping force to the workpiece. The clamping force is provided by the one or more clamps which are interacting with the first surface of the workpiece. The clamping force is arranged to attract the workpiece to the clamping mechanism, in particular to the one or more clamps. The clamping force prevents, or at least reduces, some movement of the workpiece relative to the one or more clamps, preferably in at least two mutually opposite senses of a direction. For example, the clamping force prevents movement of the workpiece relative to the one or more clamps in both senses along a direction substantially perpendicular to the first surface of the workpiece, wherein this direction is parallel with the process force exerted by the tool during the process. For example, in a drilling process on a horizontal, flat plate, the process force is directed vertically downwards. The clamping force is then arranged to at least reduce the vertical and in particular downward movement of the workpiece relative to the one or more clamps. The clamping force is maintained for at least a part of the process.

Thus, clamping mechanism according the invention provides in a clamping force in the vicinity of the process force. The movement of the workpiece, including vibrations, is reduced or at least more predictable. Therefore, the precision of the process is increased.

In an embodiment, the method further comprises a step of, during the interacting with the first surface of the workpiece with the one or more clamps, at least partially reducing vibrations of the workpiece during part of the process by suppressing movement of the workpiece. It is noted that this can be achieved if the one or more clamps exerting a clamping force to attract the workpiece as described above, but this can also be achieved by clamps that do not exert a clamping force to attract the workpiece. For example, the clamps can be brought into contact with the workpiece, thereby suppressing movement of the workpiece in the direction towards the clamp. Higher accuracy of the process can be achieved because of the reduced vibrations. In further embodiments as explained in more detail further below, an actuator can be provided to provide an actuator force. By arranging the actuator to provide the actuator force at the right moments and/or in the right magnitude, the movement of the workpiece can be suppressed even more, resulting in smaller vibrations.

According to the present invention, the clamping mechanism with which the method is performed further comprises an actuator for moving the one or more clamps relative to the tool. The method according to the present invention comprises the step of estimating the feed rate at which the tool moves relative to the workpiece during the process and/or estimating movement of the workpiece during the process. The method according to the present invention further comprises controlling an actuator force with the actuator during at least a part of the process, which actuator force is exerted to the workpiece via the one or more clamps and at least partially counteracts the process force and/or movements of the workpiece, and wherein said actuator force is controlled based on said estimated process force and/or estimated feed rate and/or movement of the workpiece.

Thus, the force to which the workpiece is subjected is adapted by controlling the actuator force provided by the actuator. The actuator force at least partially counteracts the process force or movement of the workpiece, thereby at least partially compensating the effect of the process force on the workpiece and reducing the bending or vibrations of the workpiece.

Said actuator force is based on the actual process force and/or feed rate and/or movement of the workpiece, which is estimated according to the method. For example, once the clamping mechanism is brought in the vicinity of the workpiece, the one or more clamps may be moved to the workpiece to engage the first surface of the workpiece, before the tool engages the workpiece. The process will be adapted to move the tool towards the first surface of the workpiece with a feed rate. Since the one or more clamps are already engaging the workpiece, the tool moves relative to the one or more clamps with the feed rate at least until the tool engages the workpiece. A sensor, e.g. a force, speed, compression or pressure sensor, can be provided to determine the feed rate. It is noted, however, that the feed rate can be estimated in other ways as well, either in addition or alternatively to the above described way. For example, the feed rate may be determined from input parameter of the control unit of the process. It is also possible to obtain this information from the actuator itself; for example, if the actuator is a linear electromotor, the displacement thereof can be monitored, and this can be used to determine the feed rate of the tool. Optionally, the process force is calculated based on the estimated feed rate.

Examples of the invention will now be described with references to the figures, wherein like reference numerals indicate like features. It is noted that these figures are only examples illustrative for the understanding of the invention, and are in no way meant to be limiting to the scope of the invention.

In the figures:
Fig. 1a: shows a side view a machine for a machining process comprising a first embodiment of the clamping mechanism according to the invention
Fig. 1b: shows a perspective view of the machine shown in fig. 1A
Fig. 1c: shows a view from below of a part of the machine shown in fig. 1A and fig. 1B
Fig. 2a: shows a first embodiment of the clamping mechanism according to the invention
Fig. 2b: schematically shows the control unit of the clamping mechanism shown in fig. 2a
Fig. 3: shows the optional modularity of the clamping mechanism according to the invention
Fig. 4: shows a second embodiment of the clamping mechanism according to the invention
Fig. 5a-5h: illustrate an embodiment of the method according to the invention
Fig. 6a: shows a machine for a machining process on a curved workpiece comprising an embodiment of the clamping mechanism according to the invention
Fig. 6b: shows a close up in side view of the clamping mechanism in the machine shown in fig. 6a

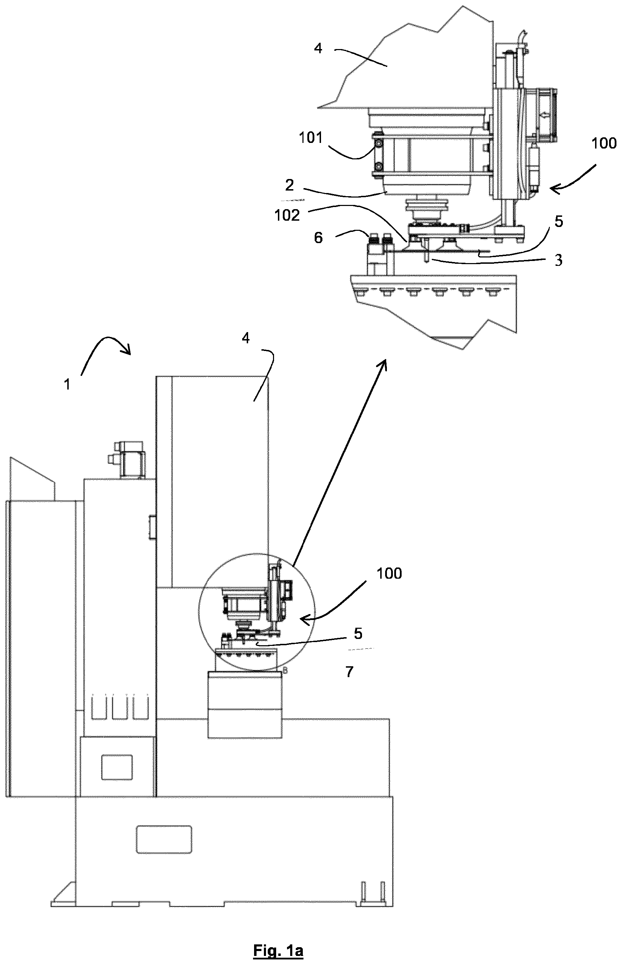

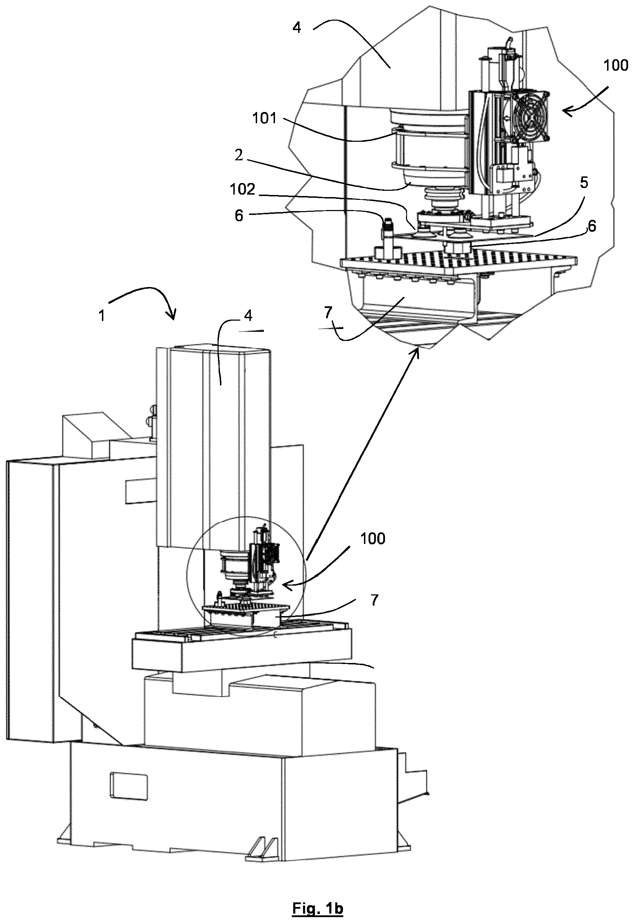

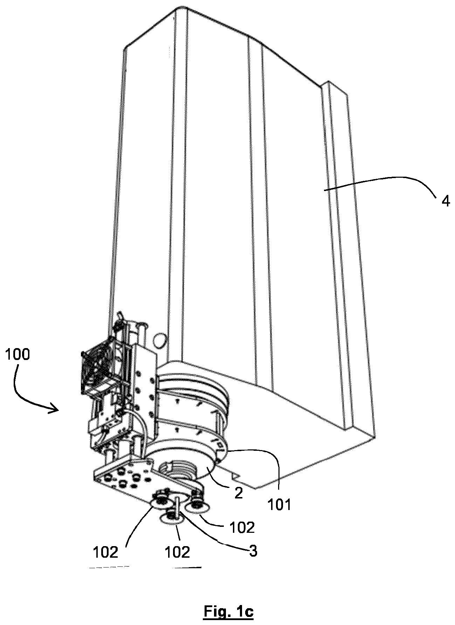

Fig. 1a shows a side view a machine 1 for a machining process comprising a first embodiment of a clamping mechanism 100 according to the invention, and fig. 1b and fig. 1c shows the same machine 1 in a perspective view and a view from below respectively. However, the invention is not limited to applications for machining processes. In fig. 1a and fig. 1b the encircled area of the machine 1 in which the clamping mechanism 1 is located is shown enlarged as well for the sake of clarity. The machine 1 in the shown example comprises a machine head 4 which comprises a tool holder, which in this case is a spindle 2, on which a tool 3 is mounted. However, the machine could also be e.g. a multi-axis robot or mobile robot. The tool 3 in the shown example is a tool for boring, and is best visible in the enlarged part in fig. 1a. However, tools for other operations such as milling can be mounted on the same spindle 2.

The machine 1 is provided with two workpiece holders 6 for holding a workpiece, in this case a flat plate 5, during the machining process. The workpiece holders 6 are supported by a support structure 7. The plate 5 is arranged horizontally, and at the beginning of the machining process the tool 3 engages the plate 5 from above for boring in and eventually through the plate 5. The tool 3 initially engages a first surface of the plate 5, which is the fig. 1a-1c is the upper surface of the plate 5. During said boring, the tool 3 exerts a process force on the plate 5 that in the shown arrangement is directed downwards. Said process force will normally cause the plate 5 to bend or deflect. The tool 3 is provided with a profile which enables the removing of material of the plate 5 during the boring process while the tool 3 rotates about its longitudinal center axis.

The clamping mechanism 100 comprises three clamps 102 that clamp the plate 5 from above. As will be explained in more detail below, the clamps 102 provide a clamping force which is exerted onto the first surface of the plate 5. In the shown arrangement, the clamping force is directed upwards and attracts the plate 6 towards the clamps 102.

The clamping mechanism 100 further comprises a machine interface 101. The machine interface 101 is adapted to connect the clamping mechanism 100 to the machine 1, in the shown example by attaching the clamping mechanism 100 to the spindle 2. The clamping mechanism 100, in particular at least the machine interface 101, thus moves together with the spindle 2, and therefore also with the tool 3. As such, the clamps 102 of the clamping mechanism 100 are always able to engage the plate 3 in the vicinity of the tool 3.

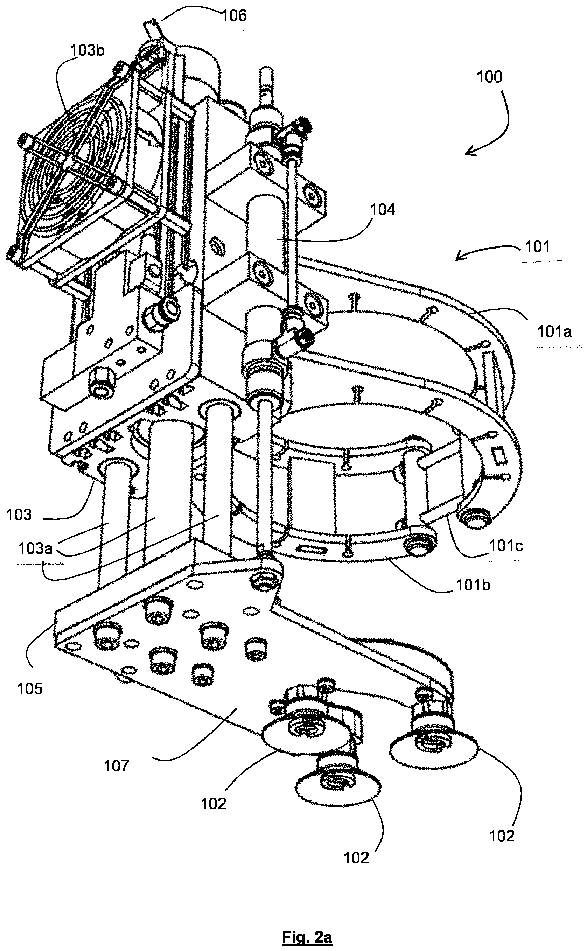

Fig. 2a shows a closer view of the first embodiment of the clamping mechanism 100 according to the invention that is attached to the machine 1 shown in fig. 1a-1c. As is clearly visible in fig. 2a, the clamps 102 in this embodiment are suction cups. The suction cups are connected to a vacuum pump (not shown). By pressing the suction cups against a workpiece, e.g. the plate 5 in fig. 1a-1c, and removing the air between the suction cup and the workpiece with the vacuum pump, a partial vacuum is created between the workpiece and the suction cup, and the workpiece is essentially attached to the clamping mechanism 100. As such, the clamping force is created. The clamps 102 are arranged such that the tool of the machine substantially in the middle of them when the clamping mechanism 100 is connected to the machine.

The machine interface 101 in the shown example comprises a mechanical connection means with an optional adjustability, which is accomplished by a first part 101a and a second part 101b which each comprise two approximately half-circular arcs above each other. A connecting part 101c connects the first part 101a to the second part 101b in an adjustable manner. That is, the connecting part 101c allows adjusting the distance between the first part 101a and the second part 101b. As such, the machine interface 101 can be adjusted in size such that the clamping mechanism 100 can be attached to different sizes of tools or tool holders. Furthermore, the mechanical connection means of the machine interface 101 allows to releasable connect the clamping mechanism 100 to a machine, such that it can easily be connected and disconnected from the machine, and possibly connected to another machine.

The clamping mechanism 100 in the shown example further comprises an optional actuator 103, which in this case is a linear electromagnetic motor. It is noted, however, that the actuator 103 could also be a pneumatic or hydraulic actuator. The actuator 103 in this example is connected via three bars 103a to an attachment plate 105, which in turn is connected to a clamp holder 107 which holds the clamps 102. The three bars 103a can be moved by an actuator force provided by the actuator 103 by extending or retracting them. As such, the clamps 102 are moveable relative to the machine interface 101, and also relative to the tool when the clamping mechanism is attached to the machine. When the clamps 102 are clamping the workpiece, the force to which the workpiece is subjected can be increased by the actuator force by retracting, i.e. moving upwards in fig. 2a, the bars 103a with the actuator 103. Said retracting will exert a force on the clamps 102, via the attachment plate 105 and the clamp holder 107. Since the partial vacuum between the suction cups 102 and the workpiece causes the workpiece to be essentially attached to the suction cups 102, said actuator force is transmitted to the workpiece. The actuator force can be applied to at least partially counteract the process force to which the workpiece is subjected during the machining process. In the shown example, the actuator 103 further comprises a cooling unit 103b for air-cooling the actuator 103. A cable 106 provides electrical power for the actuator 103

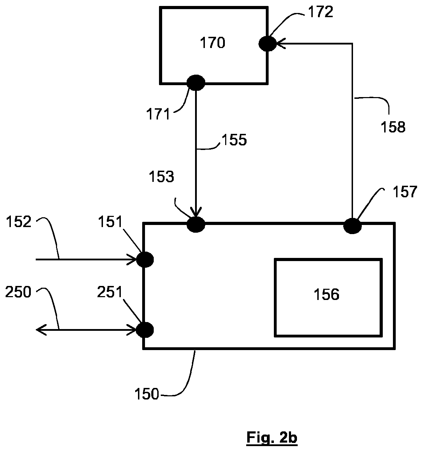

The clamping mechanism 100 further comprises a control unit 150, which in this example is not visible in fig. 2a but is schematically shown in fig. 2b. Electrical power 152 is provided to the control unit 150 via a power terminal 151 of the control unit 150. The control unit 150 comprises a first input terminal 153 for receiving process information 155 from a control unit 170 of the actuator for determining the feed rate and/or process force of the tool. The control unit 170 of the actuator comprises an output terminal 171 for this communication. To determine the process information 150, the control unit 170 of the actuator can for example monitor the displacement of the actuator. It is also possible to determine the feed rate and/or process force with a sensor, which can for example be a speed sensor, force sensor, pressure sensor or compression sensor which measures the speed, force, pressure or compression respectively, between the clamps 102 and the actuator 104 or of the clamps 102 relative to the actuator 104, depending on the type of sensor. It is noted that in other embodiments, the control unit 150 may comprise a second input terminal for receiving input from a control unit (not shown) of the machining process, which second input terminal can be in addition or alternatively to the previously mentioned first input terminal. It is also possible to provide an input terminal for receiving input that can be provided by an operator.

The control unit 150 further comprises a processing unit 156, which is adapted to determine the desired actuator force based on the process information 155 received at the input terminal 153. The control unit 150 also comprises an output terminal 157 connected to an input terminal 172 of the control unit 170 actuator 103, via which the control unit 150 is adapted to control the actuator 103 by transmitting a control signal 158 based on the determined desired actuator force.

The control unit 150 further comprises an optional communication terminal 251 connected to a historical database (not shown) for receiving and sending an information signal 250. Via the information signal 250 information relating to a second process can be received, said second process being a process performed earlier on a similar workpiece. As such, the working of the clamping mechanism can be improved over time based on previous processes. Additionally, the control unit 150 is also adapted to send information relating the current process to the historical database via the communication signal 250, allowing this information to be taken into account during later processes.

Referring now back to fig. 2a, the clamping mechanism 100 in the shown example further comprises an optional damper 104, which is adapted to dampen to movements of the clamps 102 relative to the machine interface 101. The damper 104 can be e.g. a hydraulic or pneumatic damper. Advantageously, the damper 104 dampens high frequency vibrations of the clamps 102, which in particular occur during milling processes, and in boring processes when the boring tool exits the workpiece. The frequency range of said vibrations during such processes can e.g. from 50 Hz to 500 Hz. However, also higher frequencies can be dampened by the damper 104.

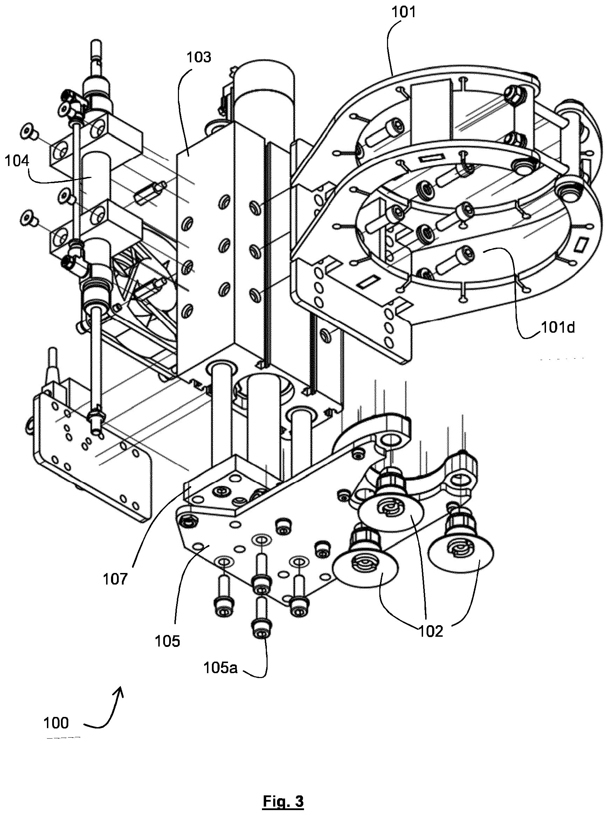

Fig. 3 illustrates the optional modularity of the clamping mechanism 100 according to the invention. The clamping mechanism 100 is this embodiment is a modular system. For example, the machine interface 101 is releasable attached to the clamping mechanism 100 and can easily be disconnected from the clamping mechanism 100, in the shown example by bolts 101d. This allows exchanging the machine interface 101 with another machine interface to enable connecting the clamping mechanism 100 to any tool or tool holder. For example, a bigger or smaller machine interface can be provided. It is also possible to provide a machine interface with a shape different than circular, depending on the machine of the process on which the clamping mechanism 100 is to be attached.

As can be seen, also the attachment plate 105 is optionally releasable attached to the clamping mechanism 100 and can easily be disconnected from the clamping mechanism 100, in the shown example by bolts 105a. As such, other clamps can be provided, for example with a bigger or smaller clamping force, or with more or less clamps, or even a different type of clamp, e.g. Bernoulli grippers or a clamp adapted to create a magnetic field.

Also the clamps 102, in this case the suction cups 102, themselves are optionally releasable attached to the clamping mechanism 100 and can easily be disconnected from the clamping mechanism 100. For example, a damaged suction cup 102 can be replaced. It is also possible to provide a different kind of suction cup. For example, for certain environments a suction cup that is resistant against water, heat or certain chemical substances is required. It is also possible to provide a bigger suction cup, which results is a bigger clamping force, or similarly a smaller suction cup.

Also the damper 104 is optionally releasable attached to the clamping mechanism 100 and can easily be disconnected from the clamping mechanism 100, in the shown example by bolts 105a. This allows to replace the damper 104 with another damper that is adapted to dampen more effective in a certain frequency range, or just only place the damper 104 when it is required, e.g. during a milling process.

Also the actuator 103 can be replaced, e.g. by an actuator that can provide larger forces or is more precise in a lower force-range. However, it is also possible to replace the actuator 103 by a different kind of actuator, e.g. pneumatic or hydraulic, or to even omit the actuator 103.

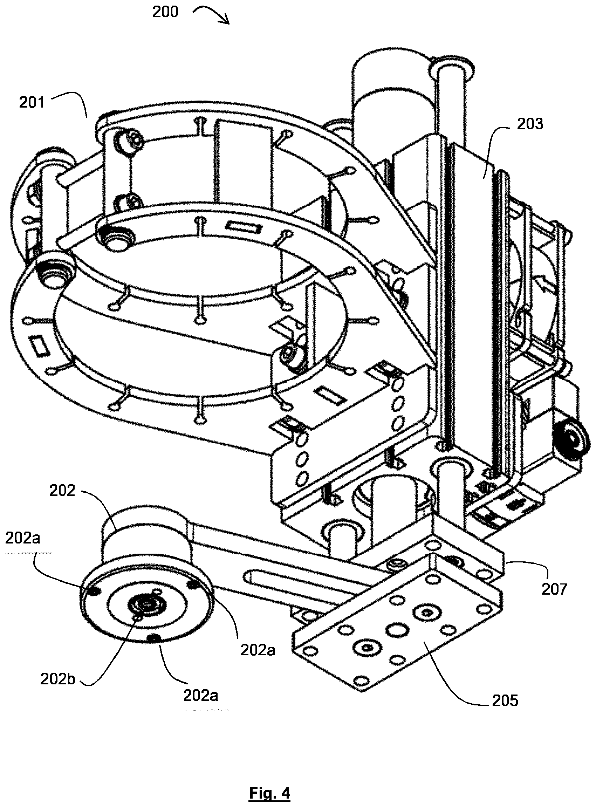

Fig. 4 shows a second embodiment of the clamping mechanism 200 according to the invention. Similarly to the first embodiment shown previously, this clamping mechanism 200 also comprises a machine interface 201 and an actuator 203. Also a clamp holder 207 is provided for attaching the clamp to via an attachment plate 205. However, in this embodiment only one clamp 202 is provided which is Bernoulli gripper 202. Nevertheless, it is noted that any suitable number of Bernoulli grippers could be provided based on the required clamping force. Furthermore, it is noted that the clamping mechanism 200 in this embodiment also is modular system and that the attachment plate 105 with the suction cups 102 of the first embodiment could be attached to the clamp holder 207 in fig. 4.

The Bernoulli gripper 202 applies the Bernoulli airflow principle to provide the clamping force. A high velocity airstream is provided through opening 202b. Since the static pressure in the high velocity airstream is decreased, the design of the Bernoulli gripper 202 results in a pressure between the workpiece and the Bernoulli gripper 202 that is lower than the atmospheric pressure, resulting in a force on the workpiece directed towards the Bernoulli gripper 202, i.e. a clamping force.

The Bernoulli gripper 202 in the shown example is provided with optional pads 202a. These pads 202a may be made from a resilient or elastic material such as rubber or polymer, e.g. polytetrafluorethylene (PTFE), also known under the trademark Teflon. The pads 202a may be in contact with the workpiece during the clamping during a machining process. In some machining processes, e.g. milling, the tool is arranged to move relative to the workpiece to machine on different locations of the workpiece. Since the clamping mechanism 200 is arranged to move together with the tool, the clamp 202 will move over the workpiece. The pads 202a are adapted to enable smooth sliding over the workpiece while avoiding damaging the workpiece, e.g. through scratching.

One advantage of the Bernoulli gripper 202 of the second embodiment is that it allows to move the tool during the process while maintaining the clamping force. As such, the clamping mechanism 200 can also be applied for processes such as milling.

The Bernoulli gripper 202 in the shown embodiment further comprises an optional pivot (not shown) between the clamp holder 207 and the attachment plate 205, which allows to adjust the location of the Bernoulli gripper 202 in what in fig. 4 is the horizontal plane. As such, the Bernoulli gripper 202 can be arranged to be closer to or further from the tool during the machining.

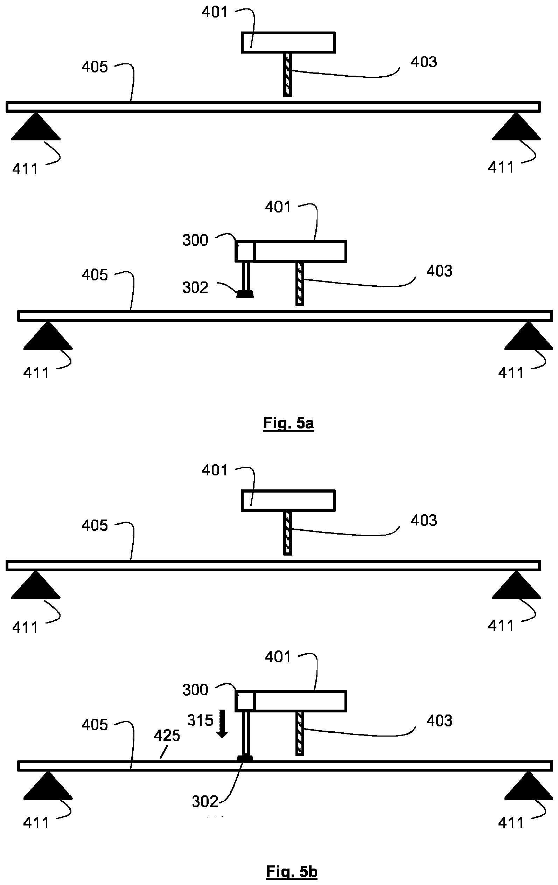

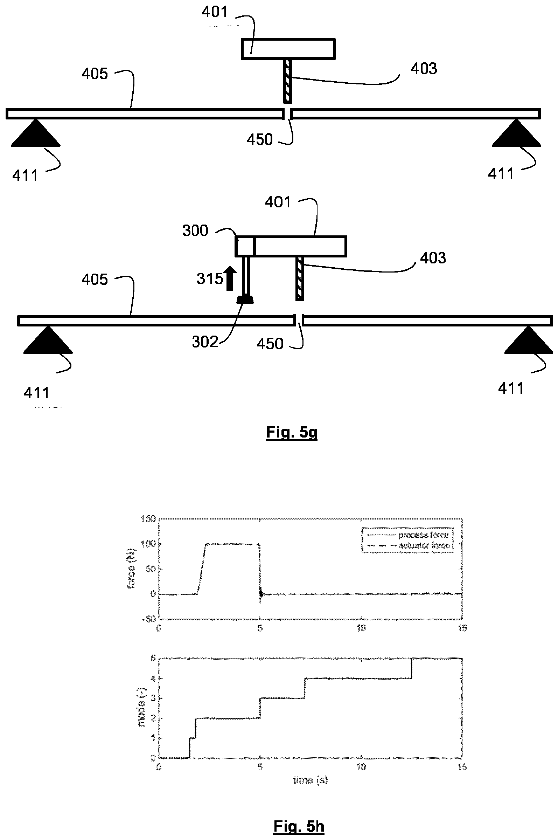

Fig. 5a-5h illustrate an embodiment of the method according to the invention. In fig. 5a-5g different steps of the method are illustrated. In these figures, the upper drawing each time represents a machining process according to the prior art, while the lower drawing illustrates the method according to the invention at the same moment of the machining process. Fig. 5h shows in the upper graph the process force and the actuator force in function of time, and in the lower graph show the different modes of the method, also in function of time.

In fig. 5a-5g, a drilling process is illustrated schematically and simplified for the sake of clarity. A drilling machine 401 comprises a drilling tool 403. A workpiece, in this case a flat composite plate 405, is supported by supports 411. As can be seen in the lower drawing in each of fig. 5a-5g, in the method according to the invention a clamping mechanism 300 is attached to the drilling machine 401. The clamping mechanism 300 is arranged to move together with the tool 403 of the drilling machine 401. Thus, in the shown example the process is the drilling process, the machine for the process is the drilling machine 401 and the tool is the drilling tool 403.

Advantageously, the clamping mechanism 300 in the shown example can be attached to the drilling machine 401 but function independently. That is, the clamping mechanism 300 does not require any structural modification of the drilling machine 401 for the attachment, and does not require any interaction with a control unit of the drilling machine 401 for achieving compensation of the drilling force. The clamping mechanism 300 is an add-on device which can be attached to any machine and function properly independently of the machine. However, this is not required for performing the method according to the invention. It is further noted that this can advantageously be combined with the clamping mechanism 100, 200 according to the invention as described above wherein the machine interface 101,201 comprises a mechanical connection means with an optional adjustability, and/or wherein the machine interface 101,201 is modular.

The clamping mechanism 300 in fig. 5a-5g further comprises a clamp 302 with a suction cup. For simplicity, only one clamp 302 is shown. However, more clamps 302 could be provided if desired. An actuator (not shown) is provided for moving the clamp 302 relative to the tool 403. It is further noted that optionally the clamping mechanism 300 applied in the method according to the invention could be a clamping mechanism according to the invention, e.g. the clamping mechanisms 100 or 200 as described above.

Referring now to fig. 5a to explain the method according the invention. The drilling machine 401 is adapted to move the tool 403 to the vicinity of the location of the workpiece 405 which is to be drilled. Since the clamping mechanism 300 is attached to the machine 401 and adapted to move together with the tool 403, it approaches said location by following the movement of the drilling tool 403. No active control or driving of the clamping mechanism 300 is required for this movement. Often, this initial movement of the tool 403 is done by the machine for the machining process at a relatively high speed.

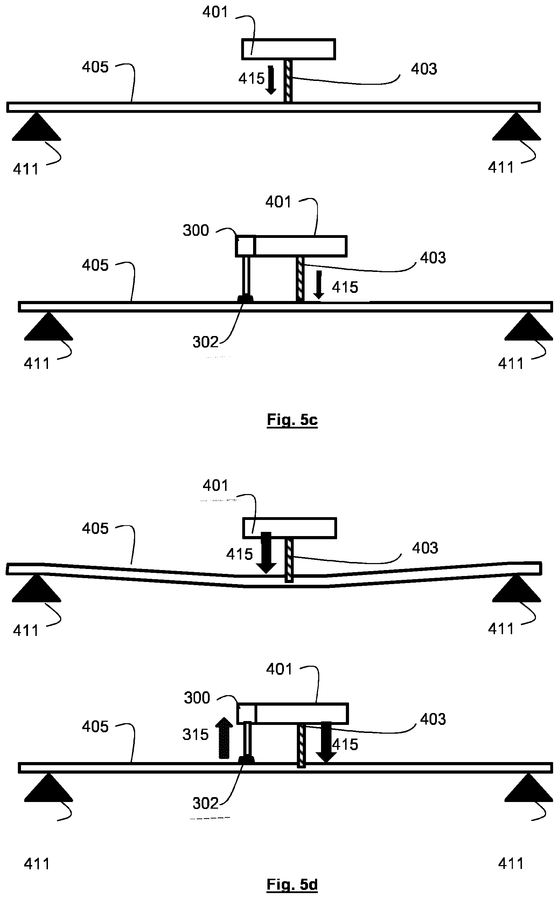

As is shown in fig. 5b, once the tool 403 and the clamping mechanism 300 are arranged in the vicinity of the workpiece 405, the clamp 302 is moved towards the workpiece 405 until it engages a first surface 425 of the workpiece 405. Since the workpiece 405 in the shown example is arranged horizontally and the tool 403 approached the workpiece 405 from above, the first surface 425 is the upper surface of the workpiece 425. This movement of the clamp 302 can be identified as Mode 0 of the method. The actuator of the clamping mechanism 300 provides a small force 315, e.g. 2N, to accomplish the movement of the clamp 302. The force provided by actuator is schematically illustrated by arrow 315, and is directed downwards in this example. After the suction cup of the clamp 302 engages the workpiece 405, Mode 1 of the method is initiated, as illustrated in fig. 5c. At the beginning of this mode, a vacuum pump (not shown) which is connected to the suction cup is arranged to create a partial vacuum between the suction cup and the workpiece, thereby providing the clamping force between the suction cup and the workpiece. The drilling machine 401 is then arranged to move the tool 403 downwards at a feed rate to also engage the first surface 425 of the workpiece 405. A force illustrated schematically by arrow 415 is provided for this movement. During this movement, the clamping mechanism 300 moves together with the tool 403, while the clamp 302 cannot freely move downwards since it is already engaging the workpiece 405. This results in a compression in the actuator, i.e. a decrease of the displacement of the actuator, which can be measured by a sensor (not shown). Based on this measurement the feed rate of the tool 403 can be determined.

Once the feed rate has been determined and the tool 403 engages the workpiece 405, mode 2 of the method can be initiated, which is illustrated in fig. 5d. During this mode, the drilling tool 403 of the drilling machine 401 is drilling in the workpiece 405. A process force, schematically shown by arrow 415, is exerted on the workpiece 405 in the downwards direction. The magnitude of the process force 415 is determined by the feed rate of the machining process at which the tool 403 is arranged to move downwards. As can be seen in the upper drawing in fig. 5d, without the clamping mechanism 300 said process force 415 causes the workpiece 405 to bend, which leads to decreased precision of the location of the drilled hole.

During mode 2 of the method, the clamping mechanism 300 provides an actuator force. The actuator force 315 can be controlled by means of the actuator of the clamping mechanism 300, schematically shown by arrow 315. The actuator force 315 is approximately of the same order of magnitude as the process force 415, but in the opposite sense. In the shown example, the actuator force 315 is directed upwards. By arranging the clamp 302 to move upwards relative to the tool 403 at the feed rate as estimated during mode 1 of the method, the clamp 302 moves upwards relative to tool 403 at the same rate that the tool 403 moves downwards relative to the fixed world, e.g. to the supports 411. These two movements compensate each other, meaning that the clamp 302 stays in substantially the same position relative to the supports 411. Meanwhile, the workpiece 405 is essentially attached to the clamp 302 by the clamping force of the suction cup of the clamp 302. Therefore, the position of the workpiece 405 is fixed relative to the clamp 302, at least at the position where the clamp 302 engages the workpiece 405, and the workpiece 405 also stays in substantially the same position relative to the supports 411. In other words, the workpiece 405 does not bend due to the process force 415, or at least bends less. The actuator force provided by the clamping mechanism 300 at least partially counteracts the process force 415 during the machining of the workpiece 405, and at least partially compensates the effects of the process force 415 on the workpiece 405. For a composite plate as the workpiece 405 in the shown example, the process force 415 during the drilling process typically is in the order or 100N, and the actuator force 315 provided by the actuator of the clamping mechanism 300 therefore is too.

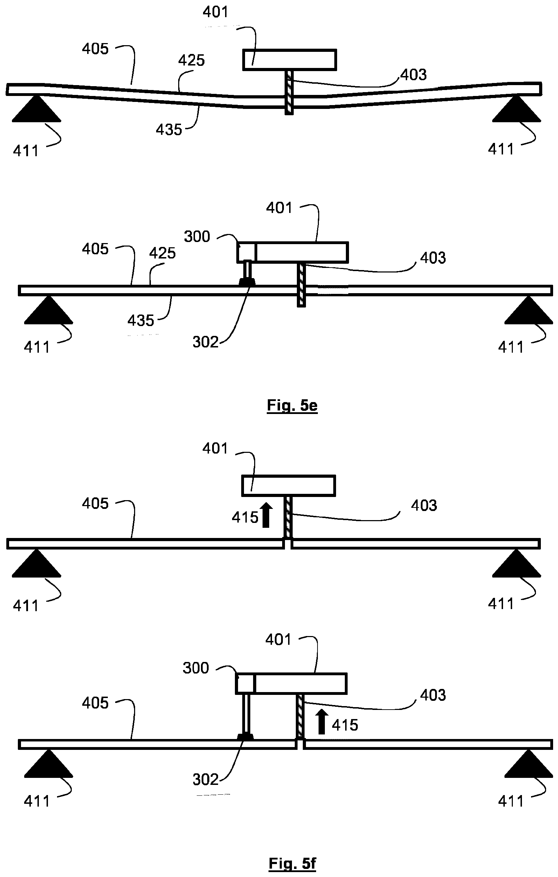

Mode 3 is initiated when the tool 403 exits the workpiece 405 at a second surface 435, which is illustrated in fig. 5e. The second surface 435 is surface opposite from the first surface 425, and in the shown example is the bottom surface. In most processes, the tool 403 is arranged to move further than the thickness of workpiece 405 at the feed rate, to ensure that the tool 403 went through the entire workpiece 405. During this movement, the clamping mechanism 300 still moves the clamp 302 upwards at the feed rate by means of the actuator, such that the workpiece 405 does not bend. However, since there is essentially no process force exerted on the workpiece, the actuator force provided by the actuator is also very small or even zero. The moment at which mode 3 is initiated, can for example be determined by the feed rate and the thickness of the workpiece, since these factors determine the moment when the tool 403 exits the workpiece 405 at the second surface 435. It is also possible to determine said moment by a sensor which measures the change in force. Mode 3 can for example be continued for a predetermined period of time. It is also possible to determine with a sensor when the drilling machine 401 arranges the tool 403 to move back upwards.

When the tool 403 is moving back upwards, mode 4 of the method is initiated, which is illustrated in fig. 5f. In mode 4, the actuator is arranged such that clamp 302 is allowed to move freely with respect to the tool 403. The clamp 302 therefore remains in contact with the first surface 425 of the workpiece 405 while the tool 403 is moving upwards. During mode 4, the partial vacuum between the suction cup and the workpiece 405 is no longer maintained, such that the clamping force is decreased and eventually becomes zero. This avoids that the workpiece 405 is subjected to forces to which the clamp 302 would be subjected, and allows to easily disengage the suction cup from the workpiece 405.

In mode 5, shown in fig. 5g, the clamp 302 is then moved upwards as well, by the actuator. This can for example be done with a force of 5N since there is no partial vacuum or clamping force between the suction cup and the workpiece 405. The clamp 302 is retracted and no longer engages the workpiece 405. The drilling process of the shown example is terminated, leaving the workpiece 405 with a drilling hole 450, schematically shown in fig. 5g.

Fig. 5h shows two graphs. The upper graph illustrates the process force, in this case the drilling force, in a full line and the actuator force in a dashed line, both in function of time. They overlap for most of the graph. The lower graph shows the modes of the method in the same function of time. What firstly can be seen in these graphs is that mode 1 is only activated for a short period of time. This is the mode wherein the feed rate of the tool is determined, which is in the small period of time between the engaging of the workpiece with the clamp and the engaging of the workpiece with the tool. Thereafter, mode 2 is initiated and the drilling force and the actuator force simultaneously become 100 N and compensate each other. Mode 3 is initiated when the drilling tool leaves the workpiece at the second surface, which is when the drilling force and actuator force both drop to zero. However, what can be seen in the upper graph is that this involves some high frequency changes in the drilling force around the time the drilling tool exits the workpiece. In an embodiment, the clamping mechanism can be provided with a damper, which can be arranged to dampen said high frequency vibrations. Finally, it can be seen that in mode 5 a small actuator force is provided for retracting the clamp.

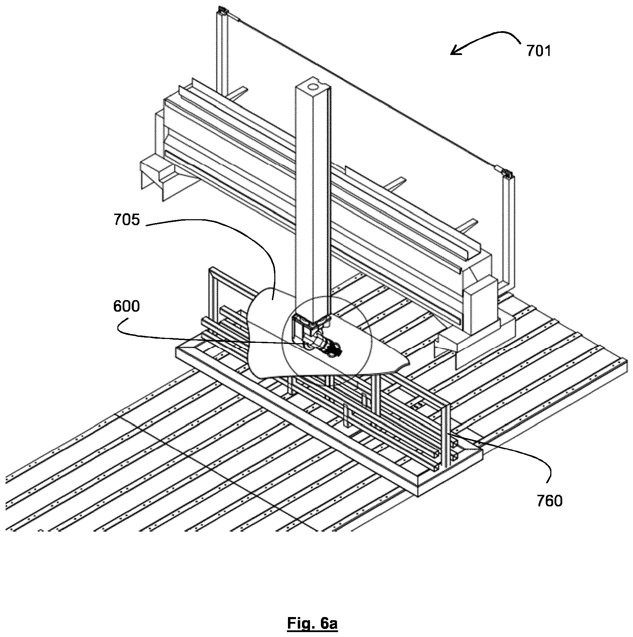

Although the principles of the invention have been explained so far respect to the processing and machining of conventional flat plate-like workpieces, additional advantages of the invention can be mentioned when the invention is applied for the processing of specific workpieces. An example of this is a curved plate-like workpiece 705 as shown in fig. 6a which is to be processed by a machine 701. This workpiece 705 is intended to be a part of an airplane. The aviation industry requires a high level of precision during processes such as machining processes and providing adhesives, meaning that bending due to process forces should be limited to a minimum. The particular shape of the workpiece 705 makes it difficult to provide compensation of the process forces locally in the vicinity of the tool during the process with standard support structures. According to the prior art, support structures are designed specifically for a specific workpiece and for the specific process to be performed on said workpiece. It is easily understood that such support structures are costly and take time to be designed and manufactured. This is especially disadvantageous in an industry such as the aviation industry, wherein components of the airplanes are usually not manufactured as mass production. Each modification of the workpiece or of process on said workpiece requires another support structure. Besides curved workpieces such as the workpiece 705 shown in fig. 6a, other kinds of workpieces that can be mentioned in this context are large flat plate-like workpiece which in the aviation industry can be 18m or longer, and on which a specific machining profile is to be machined, e.g. a specific profile of drilling holes.

The invention provides a solution for this problem with local clamping provided by a clamping mechanism 600. Because the local clamping at least reduces the bending of the workpiece 705 during the process and as such increases the precision of the process, there is no longer a need for complex support structures. As can be seen in fig. 6a, a relatively simple support structure 760 is provided for supporting the workpiece 705. In the shown arrangement, at the location of the workpiece 705 where the tool (not visible in fig. 6a) of the process is to engage the workpiece 705, there is no support provided in the vicinity to compensate the process force. Instead, the clamping mechanism 600 is arranged to compensate said process force.

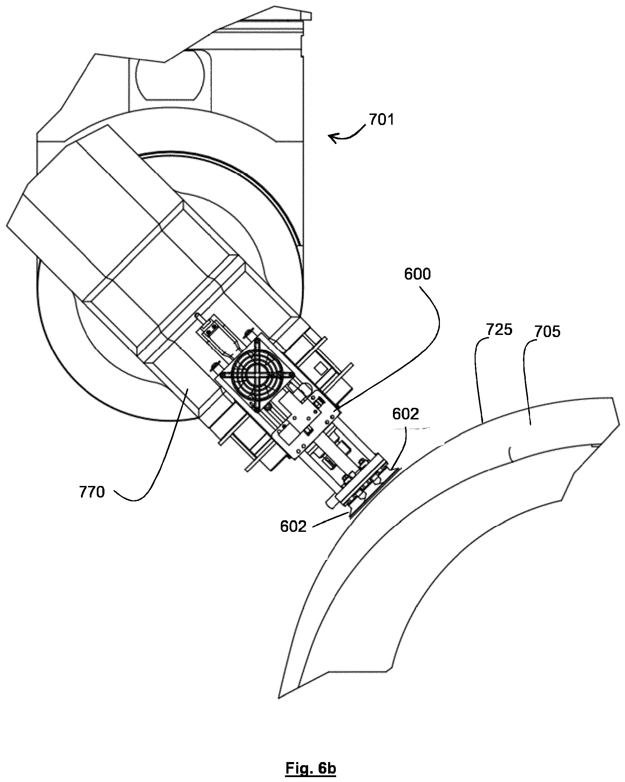

Fig. 6b shows a closer side view of the clamping mechanism 600 and the curved workpiece 705 of fig. 6a. The tool (not visible) is attached to a spindle 770 on which the clamping mechanism 600 is attached. The spindle 770 can be pivoted relative to the rest of the machine 701 such that the tool ideally approaches the workpiece 705 according to the normal line of a curved first surface 725 of the workpiece 705 on the location of the workpiece 705 where the tool engages the workpiece 705. Because the clamping mechanism 600 is attached to the spindle 770 such that it moves together with the tool, the clamping mechanism 600 also pivots together with the tool.

The shown embodiment of the clamping mechanism 600 comprises clamps 602 that are suction cups. Suction cups 602 usually comprise a resilient suction cup material, e.g. a plastic or rubber, which can be partially compressed when the suction cup 602 is arranged on a curved or other non-flat surface, such that the clamping force between the suction cup 602 and the curved first surface 725 of the workpiece 705 can be accomplished. In addition, optional hinges (not shown) are provided between each of the clamps 602 and the rest of the clamping mechanism 600, such that each clamp 602 can be pivoted into a position wherein the bottom of the clamp 602 is substantially parallel with the part of the first surface 725 that the clamp 602 is to engage. It is noted that these hinges can also be advantageously applied with other types of clamps, e.g. Bernoulli grippers.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting, but rather, to provide an understandable description of the invention.

The terms "a" or "an", as used herein, are defined as one or more than one. The terms including and/or having, as used herein, are defined as comprising (i.e., open language, not excluding other elements or steps). Any reference signs in the claims should not be construed as limiting the scope of the claims or the invention.

The mere fact that certain measures are recited in mutually different dependent claims does not indicate that a combination of these measures cannot be used to advantage.

A single processor or other unit may fulfil the functions of several items recited in the description and claims, e.g. of control units. Any communication between features can be wired or wireless according to known methods.

The method according to the invention may be implemented as a program, computer program or software application, or the like. A program, computer program, or software application may include a subroutine, a function, a procedure, an object method, an object implementation, an executable application, an applet, a servlet, a source code, an object code, a shared library/dynamic load library and/or other sequence of instructions designed for execution on a computer system.

A computer program may be stored and/or distributed on a suitable medium, such as an optical storage medium or a solid-state medium supplied together with or as part of other hardware, but also be distributed in other forms, such as via the Internet or other wired or wireless telecommunication systems.

## Claims

1. Clamping mechanism for locally clamping a workpiece during a process with a machine comprising a tool which interacts with a first surface of the workpiece and exerts a process force on the workpiece,
the clamping mechanism comprising:
• a machine interface
• one or more clamps for interacting with the first surface of the workpiece in the vicinity of the tool, wherein the one or more clamps are adapted to be moveable relative to the machine interface, wherein said one or more clamps are adapted to, when interacting with the first surface, exert a clamping force on the workpiece to attract the workpiece to the clamping mechanism
• an actuator adapted to move the one or more clamps relative to the machine interface, wherein the actuator is adapted to provide an actuator force which is exerted to the workpiece via the one or more clamps
and being **characterized by** the following:
° the machine interface comprising mechanical connection means adapted to connect the clamping mechanism to the machine for the process, wherein the machine interface is adapted to, when connected, be moveable together with the tool, wherein the mechanical connection means are adapted to attach the clamping mechanism in a releasable manner to the machine for the process
• a control unit which comprises:
i. a processing unit for determining a desired actuator force and/or desired actuator displacement,
ii. an output terminal connected to the actuator for controlling the actuator force of the actuator during the process based on the determined desired actuator force and/or displacement,
wherein the control unit further comprises an input terminal for receiving process information, wherein said input terminal is connected to the actuator, and/or a sensor;
wherein the processing unit is configured to estimate the real-time feed rate of the tool of the process and/or movement of the workpiece based on said process information, and wherein the processing unit further is configured to determine the desired actuator force and/or displacement based on said estimated real-time feed rate and/or movement of the workpiece, and
wherein the control unit is configured to control the actuator force via the output terminal based on said determined desired actuator force and/or displacement.

2. Clamping mechanism according to claim 1, wherein the clamping mechanism is adapted to be attached to a cylindrical spindle, wherein the mechanical connection means comprise a circular attachment mechanism for clamping around the cylindrical spindle, wherein a diameter of said circular attachment mechanism is adaptable, such that the clamping mechanism can be attached to spindles of different sizes, either on the same machine or on different machines.

3. Clamping mechanism according to claim 1 or claim 2, wherein the control unit is adapted to estimate the feed rate and/or movement of the workpiece without communicating with the control unit of the process.

4. Clamping mechanism according to one or more of the preceding claims, wherein the process information is determined independently of the control unit of the process.

5. Clamping mechanism according to one or more of the preceding claims, wherein at least one of the one or more sensors to which the input terminal is connected, is a speed sensor, force sensor, pressure sensor or compression sensor which measures the speed, force, pressure or compressions, respectively between the clamps and the actuator or of the clamps relative to the actuator.

6. Clamping mechanism according to any of the preceding claims, wherein the one or more clamps comprise a Bernoulli gripper, or wherein at least one of the one or more clamps is adapted create a magnetic field for exerting a magnetic clamping force on a ferromagnetic workpiece or wherein the one or more clamps comprise a suction cup.

7. Clamping mechanism according to any of the preceding claims, wherein the one or more clamps are arranged to provide the clamping force in a first direction and are adapted to be moveable relative to the machine interface in the first direction, wherein the clamping mechanism is adapted to allow movement of the one or more clamps relative to the machine interface in the first direction below a predetermined frequency while suppressing movement of the one or more clamps relative to the machine interface in the first direction above said predetermined frequency.

8. Clamping mechanism according to claim 7, further comprising one or more springs and/or dampeners arranged to suppress said movement above the predetermined frequency.

9. Clamping mechanism according to one or more of the preceding claims, further comprising a bending measurement sensor adapted to:
a. measure the bending of the workpiece during the process, and
b. to communicate with the control unit,
wherein the control unit is adapted to control the actuator force based on the actual bending.

10. Clamping mechanism according to one or more of the preceding claims, further comprising a communication terminal for receiving information relating to at least a second process, from a control unit simultaneously performing the second process on the same workpiece or from a historical database comprising information relating to a second process performed earlier on the same or a similar workpiece, wherein the control unit is configured to control the actuator force via the output terminal based on said information related to at least the second process.

11. Machine, such as a handheld machine, comprising a clamping mechanism according to any of the preceding claims, wherein the one or more clamps are adapted to clamp the machine to the workpiece.

12. Machine according to claim 11, wherein the clamping mechanism is adapted to reduce vibration and bending of the workpiece relative to the machine through its movement relative to the machine interface, the movement being controlled by the actuator, or being controlled by a damper or a spring.

13. Method for locally clamping a workpiece with a clamping mechanism during a process with a machine comprising a tool which interacts with a first surface of the workpiece and exerts a process force on the workpiece,
**characterized in that**:
the clamping mechanism:
a. is moveable together with the tool and comprises one or more clamps,
b. comprises a machine interface which comprises mechanical connection means adapted to attach the clamping mechanism in a releasable manner to the machine for the process
c. comprises an actuator for moving the one or more clamps relative to the tool,
d. comprises a control unit which comprises: a processing unit for determining a desired actuator force and/or desired actuator displacement, and an output terminal connected to the actuator for controlling the actuator force of the actuator during the process based on the determined desired actuator force and/or displacement
and, **in that**
the method comprising the following steps:
e. attach the clamping mechanism in a releasable manner to the machine for the process using the mechanical connection means,
f. approaching with the clamping mechanism the location of the workpiece that is to be processed by following the movement of the tool,
g. interacting with a first surface of the workpiece with the one or more clamps and exerting a clamping force to the workpiece at least during part of the process with the one or more clamps to attract the workpiece to the clamping mechanism,
h. estimating with the control unit, based on process information received from the actuator and/or a sensor, the feed rate at which the tool moves relative to the workpiece during the process and/or movement of the workpiece during the process,
i. controlling an actuator force with the actuator during at least a part of the process, which actuator force is exerted to the workpiece via the one or more clamps and at least partially counteracts the process force, and wherein said actuator force is controlled based on said estimated feed rate and/or estimated movement of the workpiece,
j. stop interacting with the first surface of the workpiece with the one or more clamps.

14. Method according to claim 13, wherein the control unit is adapted to estimate the process force and/or feed rate and/or movement of the workpiece without communicating with a control unit of the process, wherein the process information is determined independently of the process or control unit of the process, wherein the clamping mechanism is arranged to determine the process information.

15. Method according to claim 13 or 14, further comprising the following step:
a. during the process, detecting when the tool approaches a second surface of the workpiece, wherein said second surface is opposite of the first surface of the workpiece and the tool is arranged to exit the workpiece via the second surface,
b. reducing the actuator force when the tool approaches the second surface of the workpiece, and/or arranging to actuator to compensate vibrations when the tool exits the workpiece via the second surface.

## Patentansprüche

1. Einspannmechanismus zum örtlichen Einspannen eines Werkstücks während eines Vorgangs mit einer Maschine, umfassend ein Werkzeug, das mit einer ersten Fläche des Werkstücks zusammenwirkt und eine Vorgangskraft auf das Werkstück aufbringt, wobei der Einspannmechanismus Folgendes umfasst:
• eine Maschinenschnittstelle,
• einen oder mehrere Spanner zum Zusammenwirken mit der ersten Fläche des Werkstücks in der Nähe des Werkzeugs, wobei der eine oder die mehreren Spanner dazu eingerichtet sind, in Bezug zur Maschinenschnittstelle beweglich zu sein, wobei der eine oder die mehreren Spanner dazu eingerichtet sind, beim Zusammenwirken mit der ersten Fläche eine Spannkraft auf das Werkstück aufzubringen, um das Werkstück zum Einspannmechanismus zu ziehen,
• ein Stellglied, das dazu eingerichtet ist, den einen oder die mehreren Spanner in Bezug zur Maschinenschnittstelle zu bewegen, wobei das Stellglied dazu eingerichtet ist, eine Stellgliedkraft aufzubringen, die über den einen oder die mehreren Spanner auf das Werkstück aufgebracht wird,
und durch Folgendes gekennzeichnet ist:
o dass die Maschinenschnittstelle eine mechanische Verbindungseinrichtung umfasst, die dazu eingerichtet ist, den Einspannmechanismus mit der Maschine für den Vorgang zu verbinden, wobei die Maschinenschnittstelle dazu eingerichtet ist, wenn sie verbunden ist, mit dem Werkzeug zusammen beweglich zu sein, wobei die mechanische Verbindungseinrichtung dazu eingerichtet ist, den Einspannmechanismus lösbar an der Maschine für den Vorgang zu befestigen,
• eine Steuereinheit, die Folgendes umfasst:
i. eine Verarbeitungseinheit zum Bestimmen einer gewünschten Stellgliedkraft und/oder gewünschten Stellgliedverschiebung,
ii. einen Ausgangsanschluss, der mit dem Stellglied verbunden ist, um die Stellgliedkraft des Stellglieds während des Vorgangs auf Grundlage der bestimmten gewünschten Stellgliedkraft und/oder -verschiebung zu steuern,
wobei die Steuereinheit ferner einen Eingangsanschluss zum Empfangen von Vorgangsinformationen umfasst, wobei der Eingangsanschluss mit dem Stellglied verbunden ist, und/oder einen Sensor;
wobei die Verarbeitungseinheit dazu ausgelegt ist, die Echtzeitvorschubgeschwindigkeit des Werkzeugs des Vorgangs und/oder die Bewegung des Werkstücks auf Grundlage der Vorgangsinformationen zu schätzen, und wobei die Verarbeitungseinheit ferner dazu ausgelegt ist, die gewünschte Stellgliedkraft und/oder -verschiebung auf Grundlage der geschätzten Echtzeitvorschubgeschwindigkeit und/oder Bewegung des Werkstücks zu bestimmen, und
wobei die Steuereinheit dazu ausgelegt ist, die Stellgliedkraft über den Ausgangsanschluss auf Grundlage der bestimmten gewünschten Stellgliedkraft und/oder -verschiebung zu steuern.

2. Einspannmechanismus nach Anspruch 1, wobei der Einspannmechanismus dazu eingerichtet ist, an einer zylindrischen Spindel befestigt zu sein, wobei die mechanische Verbindungseinrichtung einen kreisförmigen Befestigungsmechanismus zum Einspannen um die zylindrische Spindel umfasst, wobei der Durchmesser des kreisförmigen Befestigungsmechanismus anpassbar ist, sodass der Einspannmechanismus an Spindeln verschiedener Größen, entweder an derselben Maschine oder an verschiedenen Maschinen, befestigt werden kann.

3. Einspannmechanismus nach Anspruch 1 oder Anspruch 2, wobei die Steuereinheit dazu eingerichtet ist, die Vorschubgeschwindigkeit und/oder Bewegung des Werkstücks zu schätzen, ohne mit der Steuereinheit des Vorgangs zu kommunizieren.

4. Einspannmechanismus nach einem oder mehreren der vorstehenden Ansprüche, wobei die Vorgangsinformationen unabhängig von der Steuereinheit des Vorgangs bestimmt werden.

5. Einspannmechanismus nach einem oder mehreren der vorstehenden Ansprüche, wobei mindestens einer des einen oder der mehreren Sensoren, mit dem/denen der Eingangsanschluss verbunden ist, ein Drehzahlsensor, ein Kraftsensor, ein Drucksensor oder ein Verdichtungssensor ist, der die Drehzahl, die Kraft, den Druck oder die Verdichtungen zwischen den Spannern und dem Stellglied bzw. den Spannern in Bezug zum Stellglied misst.

6. Einspannmechanismus nach einem der vorstehenden Ansprüche, wobei der eine oder die mehreren Spanner einen Bernoulli-Greifer umfassen oder wobei mindestens einer des einen oder der mehreren Spanner dazu eingerichtet ist, ein Magnetfeld zu erzeugen, um eine magnetische Spannkraft auf ein ferromagnetisches Werkstück aufzubringen, oder wobei der eine oder die mehreren Spanner einen Saugnapf umfassen.

7. Einspannmechanismus nach einem der vorstehenden Ansprüche, wobei der eine oder die mehreren Spanner dazu angeordnet sind, die Spannkraft in eine erste Richtung vorzusehen, und dazu eingerichtet sind, in Bezug zur Maschinenschnittstelle in die erste Richtung beweglich zu sein, wobei der Einspannmechanismus dazu eingerichtet ist, eine Bewegung des einen oder der mehreren Spanner in Bezug zur Maschinenschnittstelle in die erste Richtung unter einer festgelegten Frequenz zuzulassen, während die Bewegung des einen oder der mehreren Spanner in Bezug zur Maschinenschnittstelle in die erste Richtung über der festgelegten Frequenz unterdrückt wird.

8. Einspannmechanismus nach Anspruch 7, ferner umfassend eine oder mehrere Federn und/oder Dämpfer, die dazu angeordnet sind, die Bewegung über der festgelegten Frequenz zu unterdrücken.

9. Einspannmechanismus nach einem oder mehreren der vorstehenden Ansprüche, ferner umfassend einen Biegemesssensor, der dazu eingerichtet ist:
a. die Biegung des Werkstücks während des Vorgangs zumessen und
b. mit der Steuereinheit zu kommunizieren,
wobei die Steuereinheit dazu eingerichtet ist, die Stellgliedkraft auf Grundlage der eigentlichen Biegung zu steuern.

10. Einspannmechanismus nach einem oder mehreren der vorstehenden Ansprüche, ferner umfassend einen Kommunikationsanschluss zum Empfangen von Informationen bezüglich mindestens eines zweiten Vorgangs von einer Steuereinheit, die gleichzeitig den zweiten Vorgang an demselben Werkstück ausführt, oder von einer historischen Datenbank, die Informationen bezüglich eines zweiten Vorgangs umfasst, der zuvor an demselben oder einem ähnlichen Werkstück durchgeführt wurde, wobei die Steuereinheit dazu ausgelegt ist, die Stellgliedkraft über den Ausgangsanschluss auf Grundlage der Informationen bezüglich des zweiten Vorgangs zu steuern.

11. Maschine, zum Beispiel eine handgeführte Maschine, umfassend einen Einspannmechanismus nach einem der vorstehenden Ansprüche, wobei der eine oder die mehreren Spanner dazu eingerichtet sind, die Maschine am Werkstück einzuspannen.

12. Maschine nach Anspruch 11, wobei der Einspannmechanismus dazu eingerichtet ist, die Schwingung und Biegung des Werkstücks in Bezug zur Maschine durch seine Bewegung in Bezug zur Maschinenschnittstelle zu verringern, wobei die Bewegung vom Stellglied gesteuert wird oder von einem Dämpfer oder einer Feder gesteuert wird.

13. Verfahren zum örtlichen Einspannen eines Werkstücks mit einem Einspannmechanismus während eines Vorgangs mit einer Maschine, umfassend ein Werkzeug, das mit einer ersten Fläche des Werkstücks zusammenwirkt und eine Vorgangskraft auf das Werkstück aufbringt,
**dadurch gekennzeichnet, dass**:
der Einspannmechanismus:
a. zusammen mit dem Werkzeug beweglich ist und einen oder mehrere Spanner umfasst,
b. eine Maschinenschnittstelle umfasst, die eine mechanische Verbindungseinrichtung umfasst, die dazu eingerichtet ist, den Einspannmechanismus lösbar an der Maschine für den Vorgang zu befestigen,
c. ein Stellglied umfasst, um den einen oder die mehreren Spanner in Bezug zum Werkzeug zu bewegen,
d. eine Steuereinheit umfasst, die Folgendes umfasst: eine Verarbeitungseinheit zum Bestimmen einer gewünschten Stellgliedkraft und/oder gewünschten Stellgliedverschiebung und einen Ausgangsanschluss, der mit dem Stellglied verbunden ist, um die Stellgliedkraft des Stellglieds während des Vorgangs auf Grundlage der bestimmten gewünschten Stellgliedkraft und/oder -verschiebung zu steuern,
und dadurch, dass
das Verfahren die folgenden Schritte umfasst:
e. lösbares Befestigen des Einspannmechanismus an der Maschine für den Vorgang unter Verwendung der mechanische Verbindungseinrichtung,
f. Annähern des Einspannmechanismus an die Position des zu bearbeitenden Werkstücks durch Folgen der Bewegung des Werkzeugs,
g. Zusammenwirken einer ersten Fläche des Werkstücks mit dem einen oder den mehreren Spannern und Aufbringen einer Spannkraft auf das Werkstück zumindest während eines Teils des Vorgangs mit dem einen oder den mehreren Spannern, um das Werkstück zum Einspannmechanismus zu ziehen,
h. Schätzen mittels der Steuereinheit, auf Grundlage der von dem Stellglied und/oder einem Sensor empfangenen Vorgangsinformationen, der Vorschubgeschwindigkeit, mit der sich das Werkzeug in Bezug zum Werkstück während des Vorgangs bewegt und/oder der Bewegung des Werkstücks während des Vorgangs,
i. Steuern einer Stellgliedkraft mit dem Stellglied während zumindest eines Teils des Vorgangs, wobei die Stellgliedkraft über den einen oder die mehreren Spanner auf das Werkstück aufgebracht wird und zumindest teilweise der Vorgangskraft entgegenwirkt und wobei die Stellgliedkraft auf Grundlage der geschätzten Vorschubgeschwindigkeit und/oder der geschätzten Bewegung des Werkstücks gesteuert wird,
j. Beenden des Zusammenwirkens der ersten Fläche des Werkstücks mit dem einen oder den mehreren Spannern.

14. Verfahren nach Anspruch 13, wobei die Steuereinheit dazu eingerichtet ist, die Vorgangskraft und/oder Vorschubgeschwindigkeit und/oder Bewegung des Werkstücks zu schätzen, ohne mit einer Steuereinheit des Vorgangs zu kommunizieren, wobei die Vorgangsinformationen unabhängig vom Vorgang oder von der Steuereinheit des Vorgangs bestimmt wird, wobei der Einspannmechanismus dazu angeordnet ist, die Vorgangsinformationen zu bestimmen.

15. Verfahren nach Anspruch 13 oder 14, ferner folgende Schritte umfassend:
a. während des Vorgangs, Erfassen, wenn sich das Werkzeug einer zweiten Fläche des Werkstücks annähert, wobei die zweite Fläche der ersten Fläche des Werkstücks entgegengesetzt ist und das Werkzeug dazu angeordnet ist, über die zweite Fläche aus dem Werkstück auszutreten,
b. Verringern der Stellgliedkraft, wenn sich das Werkzeug der zweiten Fläche des Werkstücks annähert, und/oder Anordnen des Stellglieds, die Schwingungen auszugleichen, wenn das Werkzeug über die zweite Fläche aus dem Werkstück austritt.

## Revendications

1. Mécanisme de serrage destiné à serrer localement une pièce à usiner pendant un processus avec une machine comprenant un outil qui interagit avec une première surface de la pièce à usiner et exerce une force de processus sur la pièce à usiner,
le mécanisme de serrage comprenant :
• une interface machine
• une ou plusieurs pinces pour interagir avec la première surface de la pièce à usiner à proximité de l'outil, la ou les pinces étant conçues pour être mobiles par rapport à l'interface machine, ladite ou lesdites pinces étant conçues pour, lorsqu'elles interagissent avec la première surface, exercer une force de serrage sur la pièce à usiner afin d'attirer la pièce à usiner vers le mécanisme de serrage
• un actionneur conçu pour déplacer la ou les pinces par rapport à l'interface machine, l'actionneur étant conçu pour fournir une force d'actionnement qui est exercée sur la pièce à usiner par l'intermédiaire de la ou des pinces
et étant **caractérisé par** ce qui suit :
l'interface machine comprenant un moyen de liaison mécanique conçu pour relier le mécanisme de serrage à la machine pour le processus, l'interface machine étant conçue pour, lorsqu'elle est reliée, être mobile avec l'outil, le moyen de liaison mécanique étant conçu pour fixer le mécanisme de serrage de manière amovible à la machine pour le processus
• une unité de commande qui comprend :
i. une unité de traitement pour déterminer une force d'actionnement voulue et/ou un déplacement d'actionnement voulu,
ii. un terminal de sortie connecté à l'actionneur pour commander la force d'actionnement de l'actionneur pendant le processus en fonction de la force et/ou du déplacement d'actionnement voulus,
l'unité de commande comprenant en outre un terminal d'entrée pour recevoir des informations de processus, ledit terminal d'entrée étant connecté à l'actionneur et/ou à un capteur ;
l'unité de traitement étant conçue pour estimer la vitesse d'avance en temps réel de l'outil du processus et/ou le mouvement de la pièce à usiner en fonction desdites informations de processus, et l'unité de traitement étant en outre conçue pour déterminer la force et/ou le déplacement d'actionnement voulus en fonction de ladite vitesse d'avance en temps réel estimée et/ou du mouvement de la pièce à usiner, et
l'unité de commande étant conçue pour commander la force d'actionnement par l'intermédiaire du terminal de sortie en fonction de ladite force et/ou dudit déplacement d'actionnement voulus.

2. Mécanisme de serrage selon la revendication 1, le mécanisme de serrage étant conçu pour être fixé à une broche cylindrique, le moyen de liaison mécanique comprenant un mécanisme de fixation circulaire destiné à effectuer un serrage autour de la broche cylindrique, un diamètre dudit mécanisme de fixation circulaire pouvant être adapté, de sorte que le mécanisme de serrage puisse être fixé à des broches de différentes tailles, soit sur la même machine, soit sur des machines différentes.

3. Mécanisme de serrage selon la revendication 1 ou la revendication 2, l'unité de commande étant conçue pour estimer la vitesse d'avance et/ou le mouvement de la pièce à usiner sans communiquer avec l'unité de commande du processus.

4. Mécanisme de serrage selon une ou plusieurs des revendications précédentes, les informations de processus étant déterminées indépendamment de l'unité de commande du processus.

5. Mécanisme de serrage selon une ou plusieurs des revendications précédentes, au moins l'un du ou des capteurs auxquels la borne d'entrée est connectée étant un capteur de vitesse, un capteur de force, un capteur de pression ou un capteur de compression qui mesure la vitesse, la force, la pression ou les compressions, respectivement entre les pinces et l'actionneur ou des pinces par rapport à l'actionneur.

6. Mécanisme de serrage selon l'une quelconque des revendications précédentes, la ou les pinces comprenant une pince de Bernoulli, ou au moins l'une de la ou des pinces étant conçue pour créer un champ magnétique afin d'exercer une force de serrage magnétique sur une pièce à usiner ferromagnétique, ou la ou les pinces comprenant une ventouse.

7. Mécanisme de serrage selon l'une quelconque des revendications précédentes, la ou les pinces étant conçues pour fournir la force de serrage dans une première direction et étant conçues pour être mobiles par rapport à l'interface machine dans la première direction, le mécanisme de serrage étant conçu pour permettre le mouvement de la ou des pinces par rapport à l'interface machine dans la première direction en dessous d'une fréquence prédéfinie tout en supprimant le mouvement de la ou des pinces par rapport à l'interface machine dans la première direction au-dessus de ladite fréquence prédéfinie.

8. Mécanisme de serrage selon la revendication 7, comprenant en outre un ou plusieurs ressorts et/ou amortisseurs conçus pour supprimer ledit mouvement au-dessus de la fréquence prédéfinie.

9. Mécanisme de serrage selon une ou plusieurs des revendications précédentes, comprenant en outre un capteur de mesure de flexion conçu pour :
a. mesurer la flexion de la pièce à usiner pendant le processus, et
b. communiquer avec l'unité de commande,
l'unité de commande étant conçue pour commander la force d'actionnement en fonction de la flexion réelle.

10. Mécanisme de serrage selon une ou plusieurs des revendications précédentes, comprenant en outre un terminal de communication destiné à recevoir des informations relatives à au moins un second processus, provenant d'une unité de commande exécutant simultanément le second processus sur la même pièce à usiner ou d'une base de données historique comprenant des informations relatives à un second processus exécuté précédemment sur la même pièce à usiner ou une pièce à usiner similaire, l'unité de commande étant conçue pour commander la force d'actionnement par l'intermédiaire du terminal de sortie en fonction desdites informations relatives à au moins le second processus.

11. Machine, telle qu'une machine portative, comprenant un mécanisme de serrage selon l'une quelconque des revendications précédentes, la ou les pinces étant conçues pour serrer la machine sur la pièce à usiner.

12. Machine selon la revendication 11, le mécanisme de serrage étant conçu pour réduire les vibrations et la flexion de la pièce à usiner par rapport à la machine grâce à son mouvement par rapport à l'interface machine, le mouvement étant commandé par l'actionneur, ou étant commandé par un amortisseur ou un ressort.

13. Procédé destiné à serrer localement une pièce à usiner avec un mécanisme de serrage pendant un processus avec une machine comprenant un outil qui interagit avec une première surface de la pièce à usiner et exerce une force de processus sur la pièce à usiner, **caractérisé en ce que** :
le mécanisme de serrage :
a. est mobile avec l'outil et comprend une ou plusieurs pinces,
b. comprend une interface machine qui comprend un moyen de liaison mécanique conçu pour fixer le mécanisme de serrage de manière amovible à la machine pour le processus
c. comprend un actionneur pour déplacer la ou les pinces par rapport à l'outil,
d. comprend une unité de commande qui comprend : une unité de traitement pour déterminer une force d'actionnement voulue et/ou un déplacement d'actionnement voulu, et un terminal de sortie connecté à l'actionneur pour commander la force d'actionnement de l'actionneur pendant le processus en fonction de la force et/ou du déplacement d'actionnement voulus déterminés
et **en ce que**
le procédé comprend les étapes consistant à :
e. fixer le mécanisme de serrage de manière amovible à la machine pour le processus à l'aide du moyen de liaison mécanique,
f. approcher, à l'aide du mécanisme de serrage, l'emplacement de la pièce à usiner qui doit être traitée en suivant le mouvement de l'outil,
g. interagir avec une première surface de la pièce à usiner à l'aide de la ou des pinces et exercer une force de serrage sur la pièce à usiner au moins pendant une partie du processus avec la ou les pinces pour attirer la pièce à usiner vers le mécanisme de serrage,
h. estimer avec l'unité de commande, en fonction des informations de processus reçues de l'actionneur et/ou d'un capteur, la vitesse d'avance à laquelle l'outil se déplace par rapport à la pièce à usiner pendant le processus et/ou le mouvement de la pièce à usiner pendant le processus,
i. commander une force d'actionnement avec l'actionneur pendant au moins une partie du processus, laquelle force d'actionnement est exercée sur la pièce à usiner par l'intermédiaire de la ou des pinces et contrebalance au moins partiellement la force de processus, et ladite force d'actionnement étant commandée en fonction de la vitesse d'avance estimée et/ou du mouvement estimé de la pièce à usiner,
j. arrêter l'interaction avec la première surface de la pièce à usiner à l'aide de la ou des pinces.

14. Procédé selon la revendication 13, l'unité de commande étant conçue pour estimer la force de processus et/ou la vitesse d'avance et/ou le mouvement de la pièce à usiner sans communiquer avec une unité de commande du processus, les informations de processus étant déterminées indépendamment du processus ou de l'unité de commande du processus, le mécanisme de serrage étant conçu pour déterminer les informations de processus.

15. Procédé selon la revendication 13 ou 14, comprenant en outre les étapes consistant à :
a. au cours du processus, détecter le moment où l'outil s'approche d'une seconde surface de la pièce à usiner, ladite seconde surface étant opposée à la première surface de la pièce à usiner et l'outil étant conçu pour quitter la pièce à usiner par l'intermédiaire de la seconde surface,
b. réduire la force d'actionnement lorsque l'outil s'approche de la seconde surface de la pièce à usiner, et/ou agencer l'actionneur pour compenser les vibrations lorsque l'outil quitte la pièce à usiner par l'intermédiaire de la seconde surface.
